# EUROPÄISCHE PATENTSCHRIFT

(11) **EP 3 929 250 B1**
(45) Veröffentlichungstag und Bekanntmachung des Hinweises auf die Patenterteilung: **24.05.2023**
(21) Anmeldenummer: 21180637.7
(22) Anmeldetag: 21.06.2021
(51) Int. Cl.: C08L 77/02, C08L 77/06

(54) **POLYAMID-FORMMASSEN MIT NIEDRIGEM DIELEKTRISCHEN VERLUSTFAKTOR**
LOW DIELECTRIC LOSS FACTOR POLYAMIDE MOLDING COMPOUNDS
MASSES À MOULER À BASE DE POLYAMIDE À FAIBLE FACTEUR DE PERTE DIÉLECTRIQUE

(30) Priorität: 22.06.2020 CH 7432020
(43) Veröffentlichungstag der Anmeldung: 29.12.2021
(73) Patentinhaber: EMS-CHEMIE AG, 7013 Domat/Ems (CH)
(72) Erfinder: Abt, Doris, 7013 Domat/Ems (CH); Stöppelmann, Georg, 7402 Bonaduz (CH); Aepli, Etienne, 7013 Domat/Ems (CH); Hoffmann, Botho, 7013 Domat/Ems (CH)

(56) Entgegenhaltungen:
- EP-A1- 2 886 606
- EP-A2- 2 291 444
- EP-B1- 2 291 444

## Beschreibung

### TECHNISCHES GEBIET

Die vorliegende Erfindung betrifft mit Glasfasern verstärkte thermoplastische Formmassen auf Basis von Polyamiden und Polyphenylenether mit hoher relativer Permittivität und tiefem dielektrischen Verlustfaktor sowie Formkörper aus diesen Formmassen und deren Verwendungen. Die Formmassen enthalten zusätzlich ein LDS-Additiv und daraus hergestellte Formteile sind nach partieller Bestrahlung gezielt metallisierbar.

### STAND DER TECHNIK

Kunststoffformmassen mit hoher relativer Permittivität und geringem dielektrischem Verlustfaktor werden mit Vorteil bei der Herstellung von Gehäusen, Gehäuseteilen oder sonstigen Komponenten von über elektromagnetischen Wellen mit einer Frequenz von 0,3 bis 300 GHz kommunizierenden Geräten eingesetzt, da durch ihre Verwendung eine signifikante Beeinträchtigung der Sende- und Empfangseigenschaften dieser Geräte vermieden werden kann.

Über solche elektromagnetischen Wellen kommunizierende Geräte finden in unterschiedlichen Bereichen Anwendung, so beispielsweise in der Telekommunikation, Unterhaltungselektronik oder im Haushalt, insbesondere Sende- und Empfangsgeräte, Mobiltelefone, Tablets, Laptops, Navigationsgeräte, Überwachungskameras, Fotokameras, Sensoren, Tauchcomputer, Audioanlagen, Fernbedienungen, Lautsprecher, Kopfhörer, Radiogeräte, Fernsehgeräte, Küchengeräte, Tür- oder Toröffner, Bediengeräte für die Zentralverriegelung bei Fahrzeugen, Keyless-Go-Fahrzeugschlüssel, Temperaturmess- bzw. Temperaturanzeigegeräte, Messgeräte und Steuergeräte.

Die in EP3330319A1 beschriebenen Polyamid-Formmassen sollen eine relative Permittivität von nicht mehr als 3,5 bei einer Frequenz von 2,45 GHz aufweisen. Die Formmassen enthalten neben einem spezifischen Gemisch aus aliphatischen und amorphen bzw. mikrokristallinen Polyamiden, einen Glasfüllstoff, bestehend aus Glas mit einem Gehalt an Alkalioxiden und Erdalkalioxiden von 0 bis 12 Gew.-%, sowie Zusatzstoffe. Alle gearbeiteten Beispiele und Vergleichsbeispiele weisen unabhängig von der Zusammensetzung eine relative Permittivität von kleiner 4.0 auf. Hinsichtlich des dielektrischen Verlustfaktors und der Metallisierbarkeit werden keine Angaben gemacht.

EP 3 560 987 A1 beschreibt eine glasfaserverstärkte Formmasse mit hoher Zugfestigkeit und Schlagzähigkeit in Kombination mit niedriger Dielektrizitätskonstante und niedrigem dielektrischen Verlustfaktor. Die Formmasse enthält 10 bis 90 Gew.-% Glasfasern und 90 bis 10 Gew.-% eines Kunststoffes, wobei die Glasfaserzusammensetzung näher spezifiziert ist. Gegenüber E-Glas enthält die beschriebene Glasfaser deutlich weniger Erdalkalioxide, aber einen höheren Gehalt an Boroxid, wodurch die Dielektrizitätskonstante auf 4.8 und der dielektrische Verlustfaktor auf 0.0015, jeweils bestimmt bei 10 GHz, reduziert werden. Wie die offenbarten Beispiele zeigen, lassen sich die verbesserten dielektrischen Eigenschaften auch auf Polyamidformmassen übertragen. Allerdings werden für eine Formmasse aus PA6 und 50 Gew.-% Glasfasern eine relative Permittivität von kleiner 4.0 und ein dielektrischer Verlustfaktor von mindestens 0.0109 bestimmt. Über die Metallisierbarkeit der Formmassen werden keine Angaben gemacht.

EP2291444 beschreibt laserdirektstrukturierbare (LDS) Formmassen mit einer hohen Dielektrizitätskonstante von mindestens 4 und einem niedrigen dielektrischen Verlustfaktor von höchstens 0.01. Die Formmassen enthalten ein Basisharz, ein LDS Additiv und einen keramischen Füllstoff mit einer Dielektrizitätskonstanten ≥ 25. In den Beispielen werden Formmassen auf Basis von Polyamiden und Polyphenylenether gezeigt, die eine DK im Bereich von 4.1 bis 6.8 aufweisen. Der dielektrische Verlustfaktor der in den Beispielen beschriebenen Formmassen wird allerdings nicht offenbart.

### AUFGABE DER ERFINDUNG

Ausgehend davon bestand eine Aufgabe der vorliegenden Erfindung darin, thermoplastische Formmassen bereitzustellen, die neben einer relativen Permittivität von mindestens 5.0 und einem geringen dielektrischen Verlustfaktor von kleiner 0.008 auch gut über Spritzgussverfahren verarbeitbar sind und insbesondere ein gutes Spritzschwund- und Verzugsverhalten aufweisen. Weiterhin sollen die thermoplastischen Formmassen gute mechanische Eigenschaften aufweisen, vorzugsweise sollen die Formmassen eine Bruchspannung von mindestens 70 MPa und ein Zug-E-Modul von mindestens 5000 MPa aufweisen. Darüber hinaus sollen die Formmassen nach Laserbestrahlung gut metallisierbar sein.

Diese Aufgabe wird durch die thermoplastischen Formmassen gemäss Anspruch 1 gelöst, welche aus den folgenden Komponenten bestehen:
(A) Mischung aus wenigstens einem Polyamid (A1), wenigstens einem Polyphenylenether (A2) sowie optional einem Verträglichkeitsvermittler (A3) und optional einem olefinischen und/oder vinylaromatischen Polymeren (A4);
(B) 10 bis 40 Gew.-% Glasfüllstoff, dessen Glas-Zusammensetzung mindestens 10.0 Gew.-% Boroxid und höchstens 15 Gew.-% für die Summe aus Magnesiumoxid und Calciumoxid umfasst;
(C) 20 bis 50 Gew.-% Salze der Titansäuren, Salze der Zinnsäuren, Salze der Zirkonsäuren und Mischungen davon;
(D) 1 bis 8 Gew.-% LDS-Additiv;
(E) 0 bis 5 Gew.-% Additive, verschieden von den Komponenten (A), (B), (C) und (D);

wobei die Mischung (A) zu 80 bis 100 Gew.-% aus einer Mischung (M) der Komponenten (A1), (A2) und (A3) und zu 0 bis 20 Gew.-% aus der Komponente (A4), jeweils bezogen auf die Summe der Komponenten (M) und (A4), besteht, und wobei die Summe der Komponenten (M) und (A4) 100 Gew.-% der Mischung (A) ergibt;
und wobei die Mischung (M) zu 36 bis 92 Gew.-% aus der Komponente (A2), zu 8 bis 60 Gew.-% aus der Komponente (A1) und zu 0 bis 4 Gew.-% aus der Komponente (A3), jeweils bezogen auf die Summe der Komponenten (A1) bis (A3), besteht, und wobei die Summe der Komponenten (A1) bis (A3) 100 Gew.-% der Mischung (M) ergibt;
und wobei die Summe aus (B) und (C) im Bereich von 35 bis 70 Gew.-%, bezogen auf die Summe der Komponenten (A) bis (E), liegt;
und wobei die Summe der Komponenten (A) bis (E) 100 Gew.-% der Formmasse ergibt.

Die abhängigen Patentsprüche 2 bis 13 betreffen vorteilhafte Ausführungsformen der erfindungsgemässen thermoplastischen Formmassen. Ausserdem werden gemäss Patentanspruch 14 Formkörper aus der erfindungsgemässen thermoplastischen Formmasse bereitgestellt und die Patentansprüche 15 und 16 betreffen spezielle Formkörper.

Hinsichtlich der Zusammensetzung der Mischung (A) ergibt sich aus den obigen Angaben, dass die Komponenten (A1), (A2) und (A3) zusammen 80 bis 100 Gew.-% der Mischung (A) ausmachen und der Gehalt der Komponente (A4) in der Mischung (A) 0 bis 20 Gew.-% beträgt. Die Mischung aus den Komponenten (A1), (A2) und (A3) wird als Komponente (M) bezeichnet. Neben den Komponenten (A1) bis (A4) enthält die Mischung (A) keine weiteren Komponenten.

Die erfindungsgemässe thermoplastische Formmasse sowie daraus hergestellte Formteile weisen eine relative Permittivität von mindestens 5.0 und einen dielektrischen Verlustfaktor (DVF) von weniger als 0.008 auf. Die Messung der relativen Permittivität und des DVF erfolgt dabei nach IEC 61189-2-721 (2015) an 80 x 80 x 3 mm Platten mit einem Split Post Dielectric Resonator (SPDR) der Firma QWED, Polen bei einer Messfrequenz von 2,45 GHz und einer Temperatur von 23 °C.

Unter guten mechanischen Eigenschaften wird verstanden, dass die erfindungsgemässe Formmasse einen Zug-E-Modul von mindestens 5000 MPa, bevorzugt von mindestens 6000 MPa, und/oder eine Bruchspannung von mindestens 70 MPa, bevorzugt von mindestens 75 MPa, und/oder eine Bruchdehnung von mindestens 0,8 %, bevorzugt von mindestens 0.9 % aufweist. Hierbei werden der Zug-E-Modul, die Bruchspannung und die Bruchdehnung gemäss ISO 527 (2012) bestimmt.

Im Sinne der Erfindung bedeutet gut metallisierbar, dass aus der erfindungsgemässen thermoplastischen Formmasse spritzgegossene Formteile (Platte 60 x 60 x 2 mm) nach partieller Bestrahlung mit einem Nd:YAG-Laser (FOBA DP50 Laser, Wellenlänge = 1064 nm, Bestrahlungsbreite = 50 µm, Geschwindigkeit = 4 m/s) im Verkupferungsbad ausreichend metallisiert werden können. Dazu werden bei der Laserstrukturierung auf der Formteiloberfläche 16 nebeneinanderliegende, 10 x 10 mm grosse Bereiche bestrahlt, wobei sowohl die Pulsfrequenz (5, 6, 7 und 8 kHz) als auch die Stromstärke (24 bis 25.5 Ampere) des Lasers variiert werden. Die gereinigten Formteile werden sodann in einem reduktiven Verkupferungsbad (MacDermid MID-Copper 100 B1) für 20 bis 30 Minuten metallisiert. Ausreichend metallisert bedeutet hier nun, dass in mindestens 14 Bereichen Kupfer in einer durchschnittlichen Dicke von mindestens 3 µm abgeschieden wird.

### DARSTELLUNG DER ERFINDUNG

Überraschenderweise wurde gefunden, dass die oben geschilderte Aufgabe gelöst wird, durch eine thermoplastische Formmasse bestehend aus:
(A) Mischung aus wenigstens einem Polyamid (A1), wenigstens einem Polyphenylenether (A2) sowie optional einem Verträglichkeitsvermittler (A3) und optional einem olefinischen und/oder vinylaromatischen Polymeren (A4);
(B) 10 bis 40 Gew.-% Glasfüllstoff, dessen Glas-Zusammensetzung mindestens 10.0 Gew.-% Boroxid und höchstens 15 Gew.-% für die Summe aus Magnesiumoxid und Calciumoxid umfasst;
(C) 20 bis 50 Gew.-% Salze der Titansäuren, Salze der Zinnsäuren, Salze der Zirkonsäuren und Mischungen davon;
(C) 1 bis 8 Gew.-% LDS-Additiv;
(D) 0 bis 5 Gew.-% Additive, verschieden von den Komponenten (A), (B), (C) und (D);

wobei die Mischung (A) zu 80 bis 100 Gew.-% aus einer Mischung (M) der Komponenten (A1), (A2) und (A3) und zu 0 bis 20 Gew.-% aus der Komponente (A4), jeweils bezogen auf die Summe der Komponenten (M) und (A4), besteht, und wobei die Summe der Komponenten (M) und (A4) 100 Gew.-% der Mischung (A) ergibt;
und wobei die Mischung (M) zu 36 bis 92 Gew.-% aus der Komponente (A2), zu 8 bis 60 Gew.-% aus der Komponente (A1) und zu 0 bis 4 Gew.-% aus der Komponente (A3), jeweils bezogen auf die Summe der Komponenten (A1) bis (A3), besteht, und wobei die Summe der Komponenten (A1) bis (A3) 100 Gew.-% der Mischung (M) ergibt;
und wobei die Summe aus (B) und (C) im Bereich von 35 bis 70 Gew.-%, bezogen auf die Summe der Komponenten (A) bis (E), liegt;
und wobei die Summe der Komponenten (A) bis (E) 100 Gew.-% der Formmasse ergibt.

Der Gehalt der Mischung (A) in der Formmasse ergibt sich als Differenz der Summe der Gehalte (B) bis (E) zu 100 Gew.-% der gesamten Formmasse.

Bevorzugt liegt die Mischung (A) der Formmasse in einem Anteil von 24 bis 57.9 Gew.-%, besonders bevorzugt in einem Anteil von 31 bis 51.8 Gew.-%, bezogen auf das Gesamtgewicht der Formmasse (Summe der Komponenten (A) bis (E)), vor.

Der Anteil an Komponente (B) liegt bevorzugt im Bereich von 15 bis 35 Gew.-%, besonders bevorzugt im Bereich von 18 bis 32 Gew.-%, jeweils bezogen auf die Summe aus (A) bis (E).

Der Anteil an Komponente (C) liegt bevorzugt im Bereich von 25 bis 45 Gew.-% liegt, besonders bevorzugt im Bereich von 30 bis 42 Gew.-%, jeweils bezogen auf die Summe aus (A) bis (E).

Der Anteil der Summe aus den Komponenten (B) und (C) liegt dabei bevorzugt im Bereich von 40 bis 65 Gew.-% und besonders bevorzugt im Bereich von 45 bis 60 Gew.-%, bezogen auf die Summe (A) bis (E).

Der Anteil an Komponente (D) liegt bevorzugt im Bereich von 2 bis 6 Gew.-%, besonders bevorzugt im Bereich von 3 bis 5 Gew.-%, jeweils bezogen auf die Summe aus (A) bis (E).

Der Anteil an Komponente (E) liegt bevorzugt im Bereich von 0.1 bis 5 Gew.-%, besonders bevorzugt im Bereich von 0.2 bis 4 Gew.-%, jeweils bezogen auf die Summe aus (A) bis (E).

Wie die durchgeführten Untersuchungen zeigen, haben mit Glasfasern verstärkte Formmassen, deren polymere Matrix ausschliesslich aus Polyamiden bestehen, einen zu hohen dielektrischen Verlustfaktor, selbst dann, wenn als Verstärkungsfaser sogenannte "low DK Glasfasern" verwendet werden. Dagegen weisen Formmassen mit einer Matrix aus Polyphenylenethern einen zu hohen Verzug, insbesondere zu hohe Schwund-Werte auf, und lassen sich deutlich schlechter verarbeiten. Eine Formmasse, deren polymerer Anteil durch eine 1:1-Mischung aus Polyamid und Polyphenylenether gebildet wird, und die mit Glasfasern, bestehend aus E-Glas, verstärkt ist, weist ebenfalls einen zu hohen dielektrischen Verlust auf.

### BEGRIFFSDEFINITIONEN

Im Sinne der vorliegenden Erfindung wird unter dem Begriff "Polyamid" (Abkürzung PA) ein Oberbegriff verstanden, welcher Homopolyamide und Copolyamide umfasst. Die gewählten Schreibweisen und Abkürzungen für Polyamide und deren Monomere entsprechen den in der ISO-Norm 16396-1 (2015(D)) festgelegten. Die darin verwendeten Abkürzungen werden im folgenden Synonym zu den IUPAC Namen der Monomere verwendet, insbesondere kommen folgende Abkürzungen für Monomere vor: T oder TPS für Terephthalsäure, I oder IPS für Isophthalsäure, MACM für Bis(4-amino-3-methyl-cyclohexyl)methan (auch als 3,3'-Dimethyl-4,4'-diaminodicyclohexylmethan bezeichnet, CAS-Nr. 6864-37-5), PACM für Bis(4-aminocyclohexyl)methan (auch als 4,4'-Diaminodicyclohexylmethan bezeichnet, CAS-Nr. 1761-71-3), TMDC für Bis(4-amino-3,5-dimethyl-cyclohexyl)methan (auch als 3,3',5,5'-Tetramethyl-4,4'-diaminodicyclohexylmethan bezeichnet, CAS-Nr. 65962-45-0). Für 1,6-Hexandiamin (auch als Hexamethylendiamin bezeichnet) wird im Folgenden die Abkürzung HMDA verwendet.

Amorphe Polyamide weisen verglichen mit den teilkristallinen Polyamiden keine oder nur eine sehr geringe, kaum nachweisbare Schmelzwärme, auf. Die amorphen Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von weniger als 5 J/g, besonders bevorzugt von maximal 3 J/g, ganz besonders bevorzugt von 0 bis 1 J/g. Amorphe Polyamide besitzen auf Grund ihrer Amorphizität keinen Schmelzpunkt.

Mikrokristalline Polyamide besitzen neben einer Glasübergangstemperatur auch einen Schmelzpunkt. Sie haben jedoch eine Morphologie, bei der die Kristallite eine so kleine Dimension haben, dass eine daraus hergestellte Platte mit einer Dicke von 2 mm noch transparent ist, d.h. ihre Lichttransmission mindestens 90% und ihr Haze höchstens 3% beträgt, gemessen nach ASTM D 1003-13 (2013). Mikrokristalline Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von 5 bis 25 J/g, besonders bevorzugt von 5 bis 22 J/g, ganz besonders bevorzugt von 5 bis 20 J/g.

Teilkristalline Polyamide besitzen neben einer Glasübergangstemperatur einen ausgeprägten Schmelzpunkt und zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von mehr als 25 J/g, besonders bevorzugt von mehr als 30 J/g, ganz besonders bevorzugt von 30 bis 80 J/g.

### Relative Permittivität und dielektrischer Verlustfaktor

Die Permittivität (ε) ist ein Indikator für das Verhalten der Moleküle beim Einbringen in ein elektrisches Feld. Sie ist mit der relativen Permittivität (εᵣ) und der Permittivität des Vakuums (ε₀) über die Beziehung ε = ε · ε₀ verknüpft. Die relative Permittivität (εᵣ) stellt eine stoffabhängige Grösse dar und ist der Quotient aus der Permittivität (ε) und der Permittivität des Vakuums (ε₀). Neben der Art des Stoffes hängt die relative Permittivität (εᵣ) auch von der Frequenz des elektrischen Feldes und der Temperatur ab.

Der dielektrische Verlustfaktor gibt an, wie gross die Verluste in elektrischen Bauteilen wie z.B. Kondensatoren oder bei der Ausbreitung elektromagnetischer Wellen in Materie, z.B. KunststoffFormmassen, sind. Mit Verlust ist hierbei die Energie gemeint, die elektrisch oder elektromagnetisch umgewandelt und beispielsweise als Wärme dissipiert wird. Durch diese Verluste wird die elektromagnetische Welle gedämpft. Zur genaueren Darstellung des Verlustfaktors wird ein Kondensator betrachtet, der an eine Spannungsquelle mit sinusförmigem Spannungsverlauf über der Zeit angeschlossen ist. An einem solchen Kondensator tritt eine Phasenverschiebung ϕ zwischen Spannung und Strom auf. Ein idealer Kondensator, der keinerlei Verluste aufweist, hat eine Phasenverschiebung von ϕ = 90° Bei einem realen, verlustbehafteten Kondensator ist die Phasenverschiebung um den Verlustwinkel δ kleiner als 90°, der dielektrische Verlustfaktor entspricht dem tan δ. Der dielektrische Verlustfaktor ist demnach ein Mass dafür, welche Energiemenge ein Isolierstoff im Wechselfeld absorbiert und in Verlustwärme umwandelt. Werkstoffe mit hohem Verlustfaktor eignen sich nicht als Isolierstoff bzw. Gehäusematerial bei Hochfrequenzanwendungen. Die relative Permittivität und der dielektrische Verlustfaktor werden vorzugsweise nach IEC 61189-2-721 (2015) bestimmt.

### Komponente (A)

Die erfindungsgemässe thermoplastische Formmasse umfasst als Polymeranteil eine Mischung (A) bestehend aus wenigstens einem Polyamid (A1), wenigstens einem Polyphenylenether (A2) sowie optional einem Verträglichkeitsvermittler (A3) und optional einem olefinischen und/oder vinylaromatischen Polymeren (A4).

Dabei besteht die Mischung (A) zu 80 bis 100 Gew.-% aus einer Mischung (M) der Komponenten (A1), (A2) und (A3) und zu 0 bis 20 Gew.-% aus der Komponente (A4), jeweils bezogen auf die Summe der Komponenten (M) und (A4), wobei die Summe der Komponenten (M) und (A4) 100 Gew.-% der Mischung (A) ergibt.

Die Mischung (M) besteht zu 36 bis 92 Gew.-% aus der Komponente (A2), zu 8 bis 60 Gew.-% aus der Komponente (A1), zu 0 bis 4 Gew.-% aus der Komponente (A3), jeweils bezogen auf die Summe der Komponenten (A1) bis (A3).

Bevorzugt liegt die Komponente (A1) in der Mischung (M) in einem Anteil von 10 bis 48 Gewichtsprozent, besonders bevorzugt von 10 bis 45 Gewichtsprozent, bezogen auf die Summe (A1) bis (A3), vor.

Bevorzugt liegt die Komponente (A2) in der Mischung (M) in einem Anteil von 48 bis 89.9 Gewichtsprozent, besonders bevorzugt von 52 bis 89.8 Gewichtsprozent, bezogen auf die Summe (A1) bis (A3), vor.

Bevorzugt liegt die Komponente (A3) in der Mischung (M) in einem Anteil von 0.1 bis 4 Gewichtsprozent, besonders bevorzugt von 0.2 bis 3 Gewichtsprozent, bezogen auf die Summe (A1) bis (A3), vor.

Bevorzugt liegt die Komponente (A4) in der Mischung (A) in einem Anteil von 0 bis 20 Gewichtsprozent, bezogen auf die Summe (M) und (A4), vor, besonders bevorzugt ist die Mischung (A) frei an Komponente (A4). D.h. die Mischung (A) besteht besonders bevorzugt ausschliesslich aus den Komponenten (A1) bis (A3).

### Komponente (A1)

Eine Ausführungsform der vorliegenden Erfindung sieht vor, dass als Komponente (A1) aliphatische Polyamide bevorzugt sind. Insbesondere bevorzugt ausgewählt sind aliphatische Polyamide aus der Gruppe bestehend aus PA 46, PA 6, PA 66, PA 6/66, PA 10, PA 11, PA 12, PA 516, PA 610, PA 612, PA 614, PA 616, PA 618, PA 1010, PA 1012, PA 1014, PA 1016, PA 1018, PA 1212 und Mischungen daraus. Besonders bevorzugt sind aliphatische Polyamide mit einem N/C-Verhältnis (N = Stickstoff/ C = Kohlenstoff) von grösser oder gleich 8, da sie eine geringere Wasseraufnahme besitzen und sich so die dielektrischen Eigenschaften in feuchter Umgebung weniger ändern. Insbesondere bevorzugt sind die aliphatischen Polyamide PA610, PA 612, PA 1010, PA12 und PA 616.

Gemäss einer weiteren Ausführungsform der vorliegenden Erfindung sind als Komponente (A1) amorphe oder mikrokristalline Polyamide bevorzugt. Insbesondere bevorzugt ausgewählt sind amorphe oder mikrokristalline Polyamide aus der Gruppe bestehend aus PA 6I/6T, PA MACM9, PA MACM10, PA MACM12, PA MACM13, PA MACM14, PA MACM16, PA MACM17, PA MACM18, PA PACM10, PA PACM12, PA PACM13, PA PACM14, PA PACM16, PA PACM17, PA PACM18, PA TMDC10, PA TMDC12, PA TMDC13, PA TMDC14, PA TMDC16, PA TMDC17, PA TMDC18, PA MACM10/10, PA MACMI/12, PA MACMT/12, PA 6I/MACMI/MACMT, PA MACMI/MACMT/12, PA MACMI/MACMT/MACM12, PA MACMI/MACMT/MACM12/12, PA 6I/6T/MACMI/MACMT/12, PA 6I/6T/MACMI, PA MACMI/MACM36, PA MACMT/MACM36, PA MACMI/MACM12, PA MACMT/MACM12, PA MACM6/11 PA MACM10/10, PA MACM12/PACM12, PA MACM14/PACM14, PA MACM18/PACM18 und Mischungen daraus, wobei PA 6I/6T, PA MACM12, PA MACM14, PA TMDC12, PA TMDC14, PA MACMI/12, PA 6I/6T/MACMI/MACMT, PA MACMI/MACMT/12, PA MACMI/ MACMT/MACM12, PA 6I/6T/MACMI/MACMT/12, PA MACM10/10, PA MACM12/PACM12, PA MACM14/PACM14, PA MACM18/PACM18 und Mischungen daraus. Ganz besonders bevorzugt sind PA 6I/6T, PA MACM12, PA MACMI/12, PA MACMI/MACMT/12, PA MACMI/MACMT/MACM12, PA MACM12/PACM12 und Mischungen davon.

Gemäss einer weiteren bevorzugten Ausführungsform sind als Komponente (A1) teilkristalline, teilaromatische Polyamide bevorzugt. Die teilkristallinen, teilaromatischen Polyamide haben bevorzugtermassen eine Glasübergangstemperatur im Bereich von 90 bis 150 °C, bevorzugt im Bereich von 110 bis 140 °C und insbesondere im Bereich von 115 bis 135 °C. Der Schmelzpunkt der teilkristallinen, teilaromatischen Polyamide liegt im Bereich von 255 bis 330 °C, bevorzugt im Bereich von 270 bis 325 °C und insbesondere im Bereich von 280 bis 320 °C. Bevorzugt verfügen die teilkristallinen, teilaromatischen Polyamide der Komponente (A1) über mittels DSC bestimmte Schmelzenthalpien gemäss ISO 11357 (2013) im Bereich von 25 bis 80 J/g, vorzugsweise im Bereich von 30 bis 70 J/g.

Bevorzugte teilaromatische, teilkristalline Polyamide sind dabei aus
(a): Dicarbonsäuren: 30 bis 100 mol-%, insbesondere 50 bis 100 mol-% Terephthalsäure sowie 0 bis 70 mol-%, insbesondere 0 bis 50 mol-% mindestens einer aliphatischen Dicarbonsäure mit 6 bis 16 Kohlenstoffatomen, und/oder 0 bis 70 mol-%, insbesondere 0 bis 50 mol-% mindestens einer cycloaliphatischen Dicarbonsäure mit 8 bis 20 Kohlenstoffatomen, und/oder 0 bis 50 mol-% Isophthalsäure, jeweils bezogen auf die Gesamtmenge der Dicarbonsäuren,
(b): Diaminen: 80 bis 100 mol-% mindestens eines aliphatischen Diamins mit 4-18 Kohlenstoffatomen, vorzugsweise mit 6 bis 12 Kohlenstoffatomen sowie 0 bis 20 mol-% mindestens eines cycloaliphatischen Diamins, vorzugsweise mit 6 bis 20 Kohlenstoffatomen, wie z.B. PACM, MACM, IPDA und/oder 0 bis 20 mol-% mindestens eines araliphatischen Diamins, wie z.B. MXDA und PXDA, bezogen auf die Gesamtmenge der Diamine, sowie gegebenenfalls
(c): Aminocarbonsäuren und/oder Lactamen: je mit 6 bis 12 Kohlenstoffatomen, hergestellt.

Gemäss einer bevorzugten Ausführungsform wird dabei das teilkristalline, teilaromatische Polyamid der Komponente (A1) auf Basis von wenigstens 55 Mol-%, insbesondere von wenigstens 65 Mol-% Terephthalsäure und wenigstens 80 Mol-%, bevorzugt wenigstens 90 Mol-%, insbesondere wenigstens 95 Mol-% aliphatischen Diaminen mit 4 bis 18 Kohlenstoffatomen, vorzugsweise mit 6 bis 12 Kohlenstoffatomen, und gegebenenfalls weiteren aliphatischen, cycloaliphatischen und aromatischen Dicarbonsäuren sowie Lactamen und/oder Aminocarbonsäuren, gebildet.

Gemäss einer weiteren bevorzugten Ausführungsform sind die genannten z.B. aliphatischen Dicarbonsäuren des teilaromatischen Polyamids der Komponente (A1), die neben Terephthalsäure eingesetzt werden können, ausgewählt aus der Gruppe Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure und Dimerfettsäure (36 C-Atome). Besonders bevorzugt werden Adipinsäure, Sebazinsäure und Dodecandisäure. Dicarbonsäuren, die neben Terephthalsäure bevorzugt eingesetzt werden, sind demnach Isophthalsäure, Adipinsäure, Sebazinsäure und Dodecandisäure oder eine Mischung derartiger Dicarbonsäuren. Insbesondere werden Polyamide (A1) bevorzugt, die ausschliesslich auf Terephthalsäure als Dicarbonsäure beruhen.

Gemäss einer weiteren bevorzugten Ausführungsform sind die genannten aliphatischen Diamine des teilaromatischen Polyamids der Komponente (A1) ausgewählt aus der Gruppe 1,4-Butandiamin, 1,5-Pentandiamin, 1,6-Hexandiamin, 1,7-Heptandiamin, 1,8- Octandiamin, 1,9-Nonandiamin, Methyl-1,8-Octandiamin, 1,10-Decandiamin, 1,11- Undecandiamin, 1,12-Dodecandiamin, oder einer Mischung derartiger Diamine, wobei 1,6-Hexandiamin, 1,10-Decandiamin, 1,12-Dodecandiamin, oder eine Mischung derartiger Diamine bevorzugt ist, und wobei 1,6-Hexandiamin und 1,10-Decandiamin besonders bevorzugt sind. Neben den aliphatischen Diaminen können in einer Konzentration von 0 bis 20 Mol-%, bezogen auf die Gesamtmenge an Diaminen, cycloaliphatische und/oder araliphatische Diamine ersetzt werden.

Weiterhin bevorzugt werden die Polyamide (A1) aus folgenden Komponenten gebildet:
(a): Dicarbonsäuren: 50 bis 100 Mol-% Terephthalsäure, 0 bis 50 Mol-% einer aliphatischen Dicarbonsäure, bevorzugt mit 6 bis 12 Kohlenstoffatomen, und/oder einer cycloaliphatischen Dicarbonsäure mit bevorzugt 8 bis 20 Kohlenstoffatomen, und/oder Isophthalsäure, jeweils bezogen auf den Gesamtgehalt an anwesenden Dicarbonsäuren;
(b): Diamine: 80 bis 100 Mol-% mindestens eines aliphatischen Diamins mit 4 bis 18 Kohlenstoffatomen, vorzugsweise mit 6 bis 12 Kohlenstoffatomen, bezogen auf den Gesamtgehalt an anwesenden Diaminen, 0 bis 20 Mol-% cycloaliphatische Diamine, vorzugsweise mit 6 bis 20 Kohlenstoffatomen, wie z.B. PACM, MACM, IPDA und/oder araliphatische Diamine, wie z.B. MXDA und PXDA, wobei in den hochschmelzenden Polyamiden der prozentuale Molgehalt an Dicarbonsäuren 100 % und der prozentuale Molgehalt an Diaminen 100 % ausmacht, und gegebenenfalls aus:
(c): Aminocarbonsäuren und/oder Lactamen, enthaltend Lactame mit bevorzugt 6 bis 12 Kohlenstoffatomen, und/oder Aminocarbonsäuren mit bevorzugt 6 bis 12 Kohlenstoffatomen.

Während die Komponenten (a) und (b) bevorzugt weitgehend äquimolar eingesetzt werden, beträgt die Konzentration von (c) vorzugsweise höchstens 30 Gew.-%, bevorzugt höchstens 20 Gew.-%, insbesondere höchstens 15 Gew.-%, jeweils bezogen auf die Summe von (a) bis (c).

Geeignete cycloaliphatische Dicarbonsäuren sind die cis- und/oder trans-Cyclohexan-1,4-dicarbonsäure und/oder cis- und/oder trans-Cyclohexan-1,3-dicarbonsäure (CHDA). Die oben genannten, in der Regel eingesetzten aliphatischen Diamine können in untergeordneter Menge von nicht mehr als 20 Mol-%, von vorzugsweise nicht mehr als 15 Mol-% und insbesondere nicht mehr als 10 Mol-%, bezogen auf die Gesamtmenge der Diamine, durch andere Diamine ersetzt werden. Als cycloaliphatische Diamine können beispielsweise Cyclohexandiamin, 1,3-Bis-(aminomethyl)-cyclohexan (BAC), Isophorondiamin (IPDA), Norbornandimethylamin, 4,4'-Diaminodicyclohexylmethan (PACM), 2,2-(4,4'-Diaminodicyclohexyl)propan (PACP) und 3,3'-Dimethyl-4,4'-diaminodicyclohexylmethan (MACM) verwendet werden. Als araliphatische Diamine seien m-Xylylendiamin (MXDA) und p-Xylylendiamin (PXDA) erwähnt.

Zusätzlich zu den beschriebenen Dicarbonsäuren und Diaminen können noch Lactame und/oder Aminocarbonsäuren als polyamidbildende Komponenten (Komponente (c)) eingesetzt werden. Geeignete Verbindungen sind beispielsweise Caprolactam (CL), α,ω-Aminocapronsäure, α,ω-Aminononansäure, α,ω-Aminoundecansäure (AUA), Laurinlactam (LL) und α,ω-Aminododecansäure (ADA). Die Konzentration der zusammen mit den Komponenten (A1_a) und (A1_b) eingesetzten Aminocarbonsäuren und/oder Lactame beträgt höchstens 20 Gew.-%, bevorzugt höchstens 15 Gew.-% und besonders bevorzugt höchstens 12 Gew.-%, bezogen auf die Summe der Komponenten (A1a) bis (A1c). Speziell bevorzugt sind Lactame bzw. α,ω-Aminosäuren mit 4, 6, 7, 8, 11 oder 12 C-Atomen. Dies sind die Lactame Pyrrolidin-2-on (4 C-Atome), ε-Caprolactam (6 C-Atome), Önanthlactam (7 C-Atome), Capryllactam (8 C-Atome), Laurinlactam (12 C-Atome) bzw. die α,ω-Aminosäuren 1,4-Aminobutansäure, 1,6-Aminohexansäure, 1,7-Aminoheptansäure, 1,8-Aminooctansäure, 1,11-Aminoundecansäure und 1,12-Aminododecansäure. In einer besonders bevorzugten Ausführungsform ist Komponente (A1) frei von Caprolactam bzw. Aminocapronsäure oder frei von jeglicher Aminocarbonsäure bzw. jeglichem Lactam.

Zur Regelung der Molmasse, der relativen Viskosität bzw. der Fliessfähigkeit oder des MVR können dem Ansatz und/oder dem Vorkondensat (vor der Nachkondensation) Regler in Form von Monocarbonsäuren oder Monoaminen zugesetzt werden. Als Regler geeignete, aliphatische, cycloaliphatische oder aromatische Monocarbonsäuren oder Monoamine sind Essigsäure, Propionsäure, Buttersäure, Valeriansäure, Capronsäure, Laurinsäure, Stearinsäure, 2-Ethylhexansäure, Cyclohexansäure, Benzoesäure, 3-(3,5-di-tert-butyl-4-hydroxyphenyl)propansäure, 3,5-di-tert-butyl-4-hydroxybenzoesäure, 3-(3-tert-butyl-4-hydroxy-5-methylphenyl)propansäure, 2-(3,5-di-tert-butyl-4-ydroxybenzylthio)essigsäure, 3,3-bis(3-tert-butyl-4-hydroxyphenyl)butansäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, 2,2,6,6-tetramethylpiperidin-4-amin, 1,2,2,6,6-pentamethylpiperidin-4-amin, 4-amino-2,6-di-tert-butylphenol u.a. Die Regler können einzeln oder in Kombination benutzt werden. Es können auch andere monofunktionelle Verbindungen als Regler eingesetzt werden, die mit einer Amino- oder Säuregruppe reagieren können, wie Anhydride, Isocyanate, Säurehalogenide oder Ester. Die übliche Einsatzmenge der Regler liegt zwischen 10 und 200 mmol pro kg Polymer.

Konkrete Vertreter für die teilkristallinen teilaromatischen Polyamide (A1) sind: PA 4T/4I, PA 4T/6I, PA 5T/5I, PA 6T/6, PA 6T/6I, PA 6T/6I/6, PA 6T/66, 6T/610, 6T/612, PA 6T/10T, PA 6T/10I, PA 9T, PA 10T, PA 12T, PA 10T/10I, PA10T/106, PA10T/610, PA10T/612, PA10T/66, PA10T/6, PA10T/1010, PA10T/1012, PA10T/12, PA10T/11, PA 6T/9T, PA 6T/12T, PA 6T/10T/6I, PA 6T/6I/6, PA 6T/6I/12 sowie Mischungen davon, insbesondere vorzugsweise ist das teilaromatische Polyamid der Komponente (A1) ausgewählt aus der Gruppe: PA 6T/6I, PA 6T/10T, PA 6T/10T/6I, sowie Mischungen davon. Bevorzugt werden Polyamide (A1), welche 6T-Einheiten, insbesondere wenigstens 10 Gew.-% an 6T-Einheiten enthalten.

Erfindungsgemäss sind daher als Polyamide (A1) insbesondere folgende teilaromatische Copolyamide bevorzugt:
- teilkristallines Polyamid 6T/6I mit 55 bis 75 Mol-% Hexamethylenterephthalamid-Einheiten und 25 bis 45 Mol-% Hexamethylenisophthalamid-Einheiten;
- teilkristallines Polyamid 6T/6I mit 62 bis 73 Mol-% Hexamethylenterephthalamid-Einheiten und 25 bis 38 Mol-% Hexamethylenisophthalamid-Einheiten;
- teilkristallines Polyamid, hergestellt aus mindestens 50 Mol-% Terephthalsäure und höchstens 50 Mol-% Isophthalsäure, insbesondere aus 100 Mol-% Terephalsäure, sowie einer Mischung aus mindestens zwei Diaminen, ausgewählt aus der Gruppe Hexamethylendiamin, Nonandiamin, Methyloctandiamin und Decandiamin;
- teilkristallines Polyamid, hergestellt aus 70-100 Mol-% Terephthalsäure und 0-30 Mol-% Isophthalsäure sowie einer Mischung aus Hexamethylendiamin und Dodecandiamin;
- teilkristallines Polyamid, hergestellt aus mindestens 50 Mol-% Terephthalsäure und höchstens 50 Mol-% Dodekandisäure sowie einer Mischung aus mindestens zwei Diaminen, ausgewählt aus der Gruppe Hexamethylendiamin, Nonandiamin, Methyloctandiamin und Decandiamin;
- teilkristallines Polyamid 6T/10T mit 10 bis 60 Mol-%, bevorzugt 10 bis 40 Mol-% Hexamethylenterephthalamid-(6T)-und 40 bis 90 Mol-%, bevorzugt 60 bis 90 Mol-% Decamethylenterephthalamid-(1 0T)-Einheiten;
- teilkristallines Polyamid 6T/10T/6I mit 50 bis 90 Mol-%, vorzugsweise 50-70 Mol-% Hexamethylenterephthalamid-(6T)-, und 5 bis 45 Mol-%, vorzugsweise 10-30 Mol-% Hexamethylenisophthalamid-(6I)-Einheiten und 5 bis 45 Mol-%, vorzugsweise 20-40 Mol-% Decamethylenterephthalamid-(1 0T)-Einheiten;

Die Polyamide (A1) haben eine Lösungsviskosität ηᵣₑₗ, gemessen nach ISO 307 (2007) an Lösungen von 0.5 g Polymer in 100 ml m-Kresol bei einer Temperatur von 20 °C, bevorzugt im Bereich von 1.3 bis 2,7, besonders bevorzugt im Bereich von 1.4 bis 2,3 und insbesondere bevorzugt im Bereich von 1.5 bis 2,0.

### Komponente (A2)

Die erfindungsgemäss verwendeten Polyphenylenether sind an sich bekannt. Sie werden nach üblichen Verfahren aus in ortho-Position durch Alkylgruppen disubstituierten Phenolen durch oxidative Kupplung hergestellt (vgl. US-Patente 3661848, 3378505, 3306874, 3306875 und 3639656). Für die Herstellung werden üblicherweise Katalysatoren auf Basis von Schwermetallen wie Kupfer, Mangan oder Kobalt in Kombination mit anderen Substanzen wie sekundären Aminen, tertiären Aminen, Halogenen oder Kombinationen davon benutzt.

Geeignete Polyphenylenether sind beispielsweise Poly(2,6-dimethyl-1,4-phenylen)ether, Poly(2,6-diethyl-1,4-phenylen)ether, Poly(2-methyl-6-ethyl-1,4-phenylen)ether, Poly(2-methyl-6-propyl-1,4-phenylen) ether, Poly(2,6-dipropyl-1 ,4-phenylen)ether, Poly(2-ethyl-6-propyl-1,4-phenylen)ether oder Copolymere, wie solche, die 2,3,6-Trimethylphenol enthalten, ausserdem Polymermischungen. Bevorzugt ist Poly(2,6-dimethyl-1,4-phenylen)ether optional in Kombination mit 2,3,6-Trimethylphenoleinheiten. Die Polyphenylenether können in Form von Homopolymeren, Copolymeren, Pfropfcopolymeren, Blockcopolymeren oder lonomeren eingesetzt werden.

Geeignete Polyphenylenether weisen eine Grenzviskosität vorzugsweise im Bereich von 0,1 bis 0,6 dl/g, gemessen in Chloroform bei 25°C, auf. Dies entspricht einem Molekulargewicht Mn (Zahlenmittelwert) von 3'000 bis 40'000 g/mol und einem Gewichtsmittelwert des Molekulargewicht Mw von 5'000 bis 80'000 g/mol. Es ist möglich, eine Kombination eines hochviskosen und eines tiefviskosen Polyphenylenethers einzusetzen. Das Verhältnis der beiden unterschiedlich viskosen Polyphenylenethern hängt von den Viskositäten und den angestrebten physikalischen Eigenschaften ab.

Zur Verbesserung der Verträglichkeit zwischen Komponente (A1) und Komponente (A2) werden in einer bevorzugten Ausführungsform die eingesetzten Polyphenylenether derart modifiziert, dass sie bevorzugt Carbonyl-, Carboxyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppen kovalent gebunden enthalten. Bevorzugt werden hierzu die unmodifizierten Polyphenylenether (A2) mit α,β-ungesättigten Dicarbonylverbindungen, Amidgruppen oder Lactamgruppen enthaltenden Monomeren mit einer polymeriserbaren Doppelbindung (A3) optional in Verbindung mit Radikalstartern (A3), wie z.B. Peroxide, insbesondere Dibenzoylperoxid, modifiziert, wie dies beispielsweise in EP0654505A1 beschrieben ist.

### Komponente (A3)

Für eine bessere Verträglichkeit der Komponenten (A1) und (A2) können Verträglichkeitsvermittler in Form von funktionellen Verbindungen eingesetzt werden, die mit dem Polyphenylenether, dem Polyamid oder mit beiden wechselwirken. Die Wechselwirkung kann chemisch (z.B. durch Pfropfung) und/oder physikalisch (z.B. durch Beeinflussung der Oberflächeneigenschaften der dispersen Phase) sein.

In einer bevorzugten Ausführungsform der Erfindung umfasst der Verträglichkeitsvermittler zusätzlich einen Radikalstarter, der bevorzugt ein organisches Peroxid oder eine Azoverbindung ist. D.h. in dieser Ausführungsform wird der Verträglichkeitsvermitter in Gegenwart eines Radikalstarters pfropfpolymerisiert.

In einer besonders bevorzugten Ausführungsform wird der Verträglichkeitsvermittler ohne Radikalstarter eingesetzt.

Die Verträglichkeitsvermittler können funktionelle Verbindungen sein, die mindestens eine Carbonsäure-, Carbonsäureanhydrid-, Epoxy-, Ester-, Amid- oder Imidgruppe, bevorzugt in Kombination mit olefinische Doppelbindungen, enthalten. Beispielhaft genannt seien Maleinsäure, Maleinsäureanhydrid, Fumarsäure, Acrylsäure, Methacrylsäure, Methylmaleinsäure, Methylmaleinsäureanhydrid, Itakonsäure, Itakonsäureanhydrid, Butenylbernsteinsäure, Butenylbernsteinsäureanhydrid, Tetrahydrophthalsäure, Tetrahydrophthalsäureanhydrid N-Phenylmaleinimid, Zitronensäure, Apfelsäure und 2-Hydroxynonadecan-1,2,3-tricarbonsäure, die Mono- oder Diester der genannten Säuren mit C1-bis C12-Alkoholen wie Methanol oder Ethanol, die Mono- oder Diamide der genannten Säuren, die am Stickstoff ggf. mit Alkyl- oder Arylresten mit bis zu 12 C-Atomen substituiert sein können und die Salze mit Alkali- oder Erdalkalimetallen wie z.B. Calcium und Kalium. Besonders bevorzugt sind Maleinsäure, Fumarsäure, Maleinsäureanhydrid und Zitronensäure. Der Verträglichkeitsvermittler kann allein oder in Kombination mit einem optionalen Radikalstarter entweder direkt bei der Blendherstellung zugegeben werden oder der Polyphenylenether und/oder das Polyamid werden in einem separaten Schritt durch die Verträglichkeitsvermittler funktionalisiert.

Geeignete Radikalstarter sind beispielsweise: 1,1-Di-tert-butyl-peroxy-3,3,5-trimethylcyclohexan, Tert-butyl-peroxy-isopropyl-carbonate, Tert-butyl-peroxy-3,3,5-trimethylhexoate, Tert-butyl-peracetat, Tert-butyl-perbenzoat, 4,4-Di-tert-butyl-peroxy-valeriansäure-n-butylester, 2,2-Di-tert-butyl-peroxy-butan, Dicumylperoxid, Tert-butyl-cumyl-peroxid, 1,3-Bis(tert-butyl-peroxyisopropyl)benzol, Di-tert-butylperoxid und Azoisobutyronitril. Bevorzugt wird als Radikalstarter ein organisches Peroxid, insbesondere bevorzugt ist Dicumylperoxid.

Die Komponente (A3) umfasst demnach einen Verträglichkeitsvermittler oder eine Mischung aus Verträglichkeitsvermittler und Radikalstarter. Verträglichkeitsvermittler und Radikalstarter sind insgesamt in einer Menge von 0 bis 4 Gew.-%, bevorzugt von 0.1 bis 4 Gew.-% und besonders bevorzugt in einem Bereich von 0.2 bis 3 Gew.-%, bezogen auf die Summe (A1) bis (A3), vorhanden. Der Radikalstarter liegt dabei bevorzugt in einem Bereich von 0 bis 1 Gew.-%, besonders bevorzugt in einem Bereich von 0.05 bis 0.8 Gew.-%, bezogen auf die Summe (A1) bis (A3), vor.

In einer bevorzugten Ausführungsform wird der Verträglichkeitsvermittler ohne Zusatz eines Radikalstarters pfropfpolymerisiert, d.h. die Komponente (A3) ist bevorzugt frei an Radikalstarter.

### Komponente (A4)

Die erfindungsgemässen Mischungen (A) können neben dem Polyamid (A1), dem Polyphenylenether (A2) und dem optionalen Verträglichkeitsvermittler (A3) 0 bis 20 Gewichts-% vinylaromatische und/oder olefinische Polymere (A4) enthalten.

Beim olefinischen Polymer handelt es sich um Homo- oder Co-Polyolefine, insbesondere bevorzugt um Polymere auf Basis von Ethylen, Propylen und Butylen oder deren Copolymere sowie Copolymere mit weiteren α-olefinischen Monomeren, insbesondere 1-Penten, 1-Hexen, 1-Hepten, 1-Octen und 1-Decen.

Beim vinylaromatischen Polymer handelt es sich bevorzugt um Polystyrol oder Copolymere des Styrols mit anderen Monomeren, die mindestens eine olefinische Doppelbindung besitzen, wie z.B. die α-Olefine Ethylen, Propylen und Butylen oder Acrylsäure oder Acrylsäureester oder Butadien. Besonders bevorzugt sind Blockcopolymere mit wenigstens einem Block gebildet aus vinylaromatischen Monomeren (Block-A) und wenigstens einem Block gebildet aus olefinischen Monomeren (Block-B), wie sie beispielsweise in Styrolblockcopolymeren enthalten sind.

Die olefinischen und/oder vinylaromatischen Polymere, die als Bestandteil der Komponente (A4) verwendet werden, können einen Naturkautschuk, Polybutadien, Polyisopren, Polyisobutylen, ein Mischpolymerisat des Butadiens und/oder Isoprens mit Styrol oder Styrolderivaten und anderen Comonomeren, ein hydriertes Mischpolymerisat und oder ein Mischpolymerisat, das durch Pfropfen oder Copolymerisation mit Säureanhydriden, (Meth)acrylsäure und deren Ester entstanden ist, sein oder enthalten. Die Polymere (A4) können auch ein Pfropfkautschuk mit einem vernetzten elastomeren Kern, der aus Butadien, Isopren oder Alkylacrylaten besteht und eine Pfropfhülle aus Polystyrol hat, ein unpolares oder polares Olefinhomo- und Copolymeres wie Ethylen-Propylen-, Ethylen-Propylen-Dien- und Ethylen-Octen- oder Ethylen-Vinylacteat-Kautschuk oder ein unpolares oder polares Olefinhomo- und Copolymeres, das durch Pfropfen oder Copolymerisation mit Säureanhydriden, (Meth)acrylsäure und deren Ester entstanden ist, sein. Die Polymere (A4) können auch ein carbonsäure-funktionalisiertes Copolymer wie Poly(ethen-co-(meth)acrylsäure) oder Poly(ethen-co-1-olefin-co-(meth)acrylsäure) sein, wobei das 1-Olefin ein Alken oder ein ungesättigter (Meth)acrylsäureester mit mehr als 4 Atomen ist, einschliesslich solchen Copolymeren, in denen die Säuregruppen teilweise mit Metallionen neutralisiert sind.

Die Komponente (A4) ist vorteilhaft ausgewählt aus der Gruppe bestehend aus Polystyrol, Polybutadien-Polystyrol-Pfropfcopolymer, Styrol-Ethylen-Butylen-Styrol-Blockcopolymeren (SEBS), Styrol-Ethylen-Propylen-Styrol-Blockcopolymeren (SEPS), Styrol-Butadien-Styrol-Blockcopolymeren (SBS), Styrol-Styrol-Butadien-Styrol-Blockcopolymeren (SSBS), Ethylen/Propylen-Copolymeren, Ethylen/Propylen/Dien-Copolymeren (EPDM), Polyethylen (PE), Polypropylen (PP), Polybutadien (PB), Poly-4-methylpenten, Ethylen-Propylen-Copolymere, Ethylen-Buten-Copolymer, Ethylen-Methylhexadien-Copolymere, Propylen-Methylhexadien-Copolymere, Ethylen-Octen-Copolymer, Ethylen-Propylen-Buten-Copolymere, Ethylen-Propylen-Hexen-Copolymere, Ethylen-Propylen-Methylhexadien-Copolymere, Poly-(ethylenvinylacetat) (EVA), Ethylen-Ethylacrylat-Copolymer (EEA), Ethylen-Hexen-Copolymer, Ethylene-Propylen-Dien-Terpolymere, sowie Mischungen aus diesen Polymermaterialien. Besonders bevorzugt sind diese Polymere (A4) gepfropft mit Acrylsäure, Methacrylsäure oder Maleinsäureanhydrid, wobei der Pfropfgrad 0.1 bis 4.0 Gewichtsprozent bezogen auf das gepfropfte Polymer (A4) beträgt.

Weiterhin ist bevorzugt, dass die Mischung (A) als Komponente (A4) wenigstens ein vinylaromatisches Polymer und gegebenenfalls wenigstens ein Polyolefin enthält. Dabei ist insbesondere bevorzugt, wenn die Mischung (A) wenigstens 5 Gewichtsprozent, insbesondere wenigstens 10 Gewichtsprozent, jeweils bezogen auf die Gesamtmenge von (A), eines vinylaromatischen Polymers enthält.

Bevorzugt sind die olefinischen und/oder vinylaromatischen Polymere (A4) ausgewählt aus der Gruppe bestehend aus Styrol-Ethylen-Butylen-Styrol-Blockcopolymeren (SEBS), Styrol-Ethylen-Propylen-Styrol-Blockcopolymeren (SEPS), Styrol-Butadien-Styrol-Blockcopolymeren (SBS), Styrol-Styrol-Butadien-Styrol-Blockcopolymeren (SSBS), Polyethylen (PE), Polypropylen (PP), Polybutadien (PB), Poly-4-methylpenten, Ethylen-Propylen-Copolymere, Ethylen-Buten-Copolymer, Ethylen-Methylhexadien-Copolymere, Propylen-Methylhexadien-Copolymere, Ethylen-Octen-Copolymer, Ethylen-Propylen-Buten-Copolymere, Ethylen-Propylen-Hexen-Copolymere, Ethylen-Propylen-Methylhexadien-Copolymere, Poly-(ethylen-vinylacetat) (EVA), Ethylen-Ethylacrylat-Copolymer (EEA), Ethylen-Hexen-Copolymer, Ethylene-Propylen-Dien-Terpolymere, sowie Mischungen aus diesen Polymermaterialien.

Des Weiteren ist bevorzugt, wenn die olefinischen und/oder vinylaromatischen Polymere (A4) der Formmasse mit Carbonsäure- oder Carbonsäureanhydrid-Gruppen gepfropft sind, wobei die Pfropfung besonders bevorzugt mit Acrylsäure, Methacrylsäure oder Maleinsäureanhydrid erfolgt ist, wobei der Pfropfgrad bevorzugt 0.1 bis 4.0 Gewichtsprozent, besonders bevorzugt 0.4 bis 2.5 Gewichtsprozent und insbesondere bevorzugt 0.5 bis 2.0 Gewichtsprozent, jeweils bezogen auf das gepfropfte Polymer (A4), beträgt.

**Komponente (B)** ist ein Füllstoff auf Basis von Glas, der in 10 bis 40 Gew.-% in der Polyamid-Formmasse enthalten ist. Die Füllstoffe können sowohl faserförmig wie teilchenförmig, einzeln oder im Gemisch, vorliegen. Die Komponente (B) kann also faserförmige Füllstoffe (Verstärkungsmittel) oder partikuläre Füllstoffe oder auch ein Gemisch von Verstärkungsmitteln und partikulären Füllstoffen enthalten. Im Sinne der Erfindung werden die Begriffe Füllstoff auf Basis von Glas, Glasfüller oder Glasfüllstoff synonym gebraucht.

Gemäss einer bevorzugten Ausführungsform der vorliegenden Erfindung ist Komponente (B) mit bevorzugt 15 bis 35 Gew.-%, besonders bevorzugt mit 18 bis 32 Gew.-% in der Polyamid-Formmasse enthalten, wobei sich diese Mengenangaben auf die Summe der Komponenten (A) bis (E) beziehen.

Erfindungsgemäss verwendet wird ein Glasfüllstoff (B) basierend auf Glas, dessen Glas-Zusammensetzung mindestens 10 Gew.-% Boroxid und höchstens 15 Gew.-% für die Summe aus Magnesiumoxid und Calciumoxid, bezogen auf die Zusammensetzung des Glases, umfasst.

Gemäss einer bevorzugten Ausführungsform der vorliegenden Erfindung basiert der Glasfüllstoff auf Glas, dessen Glas-Zusammensetzung 2 bis 14 Gew.-%, besonders bevorzugt 4 bis 12 Gew.-% für die Summe der Magnesiumoxid- und Calciumoxid-Gehalte, bezogen auf die Zusammensetzung des Glases, umfasst.

Gemäss einer weiteren bevorzugten Ausführungsform der vorliegenden Erfindung basiert der Glasfüllstoff auf Glas, dessen Glas-Zusammensetzung 12 bis 24 Gew.-%, besonders bevorzugt 15 bis 22 Gew.-%, Boroxid, bezogen auf die Zusammensetzung des Glases, umfasst.

Der Glasfüller ist bevorzugt ausgewählt aus der Gruppe bestehend aus Fasern, gemahlenen Fasern, Partikeln, Flakes, Kugeln, Hohlkugeln und Mischungen hiervon, bevorzugt bestehend aus Fasern, Partikeln, Flakes und Mischungen davon. Insbesondere bevorzugt ist der Glasfüller eine Glasfaser. Besonders bevorzugt als Glasfaser, ist eine Glasfaser mit nicht-kreisförmigem Querschnitt und einem Achsenverhältnis von Haupt- zu Nebenquerschnittsachse im Bereich von 2 bis 6, bevorzugt von 3 bis 5.

Der Glasfüllstoff kann oberflächenbehandelt sein. Dies kann mit einem geeigneten Schlichte- oder Haftvermittlersystem geschehen. Dazu können zum Beispiel Systeme auf Basis von Fettsäuren, Wachsen, Silanen, Titanaten, Polyamiden, Urethanen, Polyurethanen, Polyhydroxyethern, Epoxiden, Nickel respektive Kombinationen oder Mischungen davon verwendet werden. Bevorzugt ist der Glasfüller mit Aminosilanen, Epoxysilanen, Polyamiden oder Mischungen davon oberflächenbehandelt.

Werden als Glasfüllstoff für die Komponente (B) Fasern ausgewählt, dann werden die Glasfasern bevorzugt aus der Gruppe bestehend aus geschnittenen Fasern, Endlosfasern und Mischungen davon ausgewählt, wobei die Fasern einen kreisförmigen oder nicht-kreisförmigen Querschnitt aufweisen können. Die nicht-kreisförmigen oder nicht-runden Glasfasern werden auch als flache Glasfasern bezeichnet und können eine ovale, elliptische, eckige, echteckige oder nahezu rechteckige Querschnittsfläche aufweisen.

Die geschnittenen Glasfasern besitzen vorzugsweise eine Faserlänge von 1 bis 25 mm, bevorzugt von 1,5 bis 20 mm, besonders bevorzugt von 2 bis 12 mm und ganz besonders bevorzugt von 2 bis 8 mm.

Die geschnittenen Glasfasern weisen vorzugsweise einen Durchmesser von 5 bis 20 µm, bevorzugt von 5 bis 15 µm und besonders bevorzugt von 6 bis 12 µm auf.

Werden die Glasfasern als Endlosfasern (Roving) eingesetzt, weisen sie vorzugsweise einen Durchmesser von maximal 20 µm, bevorzugt von maximal 18 µm, besonders bevorzugt von 5 bis 17 µm auf.

Bei flachen Glasfasern beträgt das Aspektverhältnis, d.h. das Verhältnis der Hauptquerschnittsachse zur Nebenquerschnittsachse 2 bis 8, bevorzugt 2 bis 6, besonders bevorzugt 3 bis 5. Die Querschnittsachsen der flachen Glasfasern sind 3 bis 40 µm lang. Bevorzugt beträgt die Länge der Nebenquerschnittsachse 3 bis 20 µm, besonders bevorzugt 4 bis 10 µm und die Länge der Hauptquerschnittsachse 6 bis 40 µm, besonders bevorzugt 12 bis 30 µm.

Zur Verstärkung der erfindungsgemäßen Polyamid-Formmassen können auch Mischungen von Fasern mit kreisförmigem (rundem) und nicht-kreisförmigem (flachem) Querschnitt verwendet werden.

Werden als Glasfüllstoff (B) Glaskugeln oder Glaspartikel ausgewählt, beträgt deren mittlerer volumetrische Durchmesser (D50) bevorzugt 0,3 bis 100 µm, besonders bevorzugt 5 bis 80 µm und insbesondere bevorzugt 17 bis 70 µm, gemessen mittels Laserbeugung nach ASTM B 822-10 (2010).

Weiterhin weist der Glasfüller eine relative Permittivität von bevorzugt höchstens 7, besonders bevorzugt von höchstens 5 und einen dielektrischen Verlustfaktor von bevorzugt höchstens 0.0040 und besonders bevorzugt von höchstens 0.0030, bestimmt anhand einer Glasplatte (80 x 80 x 3 mm) aus dem Glas des Glasfüllers gemäss IEC 61189-2-721 (2015) mit einem Split Post Dielectric Resonator (SPDR) der Firma QWED, Polen bei einer Frequenz von 2.45 GHz und einer Temperatur von 23 °C, auf.

Gemäss einer bevorzugten Ausführungsform der vorliegenden Erfindung besteht Komponente (B) ausschliesslich aus einem Glasfüller ausgewählt aus der Gruppe bestehend aus Glasfasern, gemahlenen Glasfasern, Glaspartikeln, Glas-Flakes, Glas-Kugeln, Glas-Hohlkugeln oder aus Kombinationen aus den vorgenannten, wobei der Glasfüllstoff aus Glas, bei dem die Summe der Magnesiumoxid- und Calciumoxid-Gehalte im Bereich von 2 bis 14 Gew.-% und der Gehalt an Boroxid (B₂O₃) im Bereich von 12 bis 24 Gew.-%, jeweils bezogen auf die Zusammensetzung des Glases, liegt, besteht. Besonders bevorzugt wird der Glasfüller vollständig aus Glasfasern gebildet.

In einer besonders bevorzugten Ausführungsform ist Komponente (B) ausgewählt als Glasfüllstoff, insbesondere bevorzugt als Glasfaser, deren Glas folgende Zusammensetzung umfasst: 52.0 bis 57.0 Gew.-% Siliciumdioxid, 13.0 bis 17.0 Gew.-% Aluminiumoxid, 15.0 bis 22.0 Gew.-% Boroxid, 2.0 bis 6.0 Gew.-% Magnesiumoxid, 2.0 bis 6.0 Gew.-% Calciumoxid, 1.0 bis 4.0 Gew.-% Titandioxid, 0 bis 1.5 Gew.-% Fluor, 0 bis 0.6 Gew.-% Alkalioxide.

Zur Verbesserung der dielektrischen Eigenschaften wird der erfindungsgemässen Formmasse **Komponente (C)** in Anteilen von 20 bis 50 Gew.-%, bevorzugt von 25 bis 45 Gew.-% und besonders bevorzugt von 30 bis 42 Gew.-%, jeweils bezogen auf die Formmasse (Summe A-E) hinzugefügt. Komponente (C) weist vorzugsweise eine hohe relative Permittivität von wenigstens 100 oder von wenigstens 500 auf und besitzt vorzugsweise einen dielektrischen Verlustfaktor von höchstens 0.02 oder von höchstens 0.01, bestimmt bei einer Frequenz von 2.45 GHz.

Erfindungsgemäss werden als Komponente (C) Metallsalze der Titansäure, Metallsalze der Zinnsäure und Metallsalze der Zirkonsäure sowie Mischungen davon verwendet. Die genannten Metallsalze können entweder einzeln oder in Form einer Mischung oder als feste Lösungen, vorzugsweise als Mischkristalle, vorliegen. Besonders bevorzugt sind Metalltitanate, wobei das Metall ausgewählt ist aus der Gruppe bestehend aus Barium, Strontium, Calcium, Magnesium, Blei, Zirkon, Mangan, Neodym, Wismut, Hafnium, Zinn, Zink und Mischungen davon. Die genannten Metalle können dabei allein oder in einer Kombination von zwei oder drei Metallen in den Titanaten enthalten sein.

Konkrete Beispiele für solche Metallsalze sind Bariumtitanat, Strontiumtitanat, Calciumtitanat, Magnesiumtitanat, Neodymtitanat, Wismuttitanat, Bleititanat, Nickeltitanat, Zinktitanat, Bariumstannat, Strontiumstannat, Calciumstannat, Magnesiumstannat, Neodymstannat, Wismutstannat, Bleistannat, Nickelstannat, Zinkstannat, Bariumzirkonat, Strontiumzirkonat, Calciumzirkonat, Magnesiumzirkonat, Neodymzirkonat, Wismutzirkonat, Bleizirkonat, Nickelzirkonat, Zinkzirkonat. Die besonders bevorzugten Metalltitanate können zur Verbesserung der dielektrischen Eigenschaften Anteile von Metallstannaten und Metallzirkonaten enthalten.

Besonders bevorzugt sind Kombinationen von zwei oder drei Metalltitanaten, Metallstannaten und Metallzirkonaten, wobei vorzugsweise mindestens ein Metalltitanat vorhanden ist. Insbesondere bevorzugt sind Kombinationen von Bariumtitanat mit Strontiumtitanat, von Bariumtitanat und Neodymtitanant, von Bariumtitanat mit Strontiumtitanat und Bariumstannat, von Bariumtitanat mit Strontiumtitanat und Magnesiumzirkonat, von Bariumtitanat mit Calciumtitanat und von Strontiumtitanat mit Magnesiumtitanat.

Insbesondere bevorzugt wird als Komponente (C) Barimtitanat, Strontiumtianat, Bariumstrontiumtitanat und Bariumneodymtitanat. Hinsichtlich Bariumstrontiumtitanat und Bariumneodymtitanat ist insbesondere bevorzugt, wenn der Mol-Anteil an Barium im Bereich von 55 bis 85 %, bezogen auf das Metalltitanat, liegt.

Komponente (C) wird bevorzugt als Pulver eingesetzt, bei dem 90 Vol.-% der Partikeln einen Durchmesser kleiner 10 µm, bevorzugt kleiner 5 µm und 50 Vol.-% der Partikel einen Durchmesser kleiner 5 µm, bevorzugt 2.5 µm aufweisen, bestimmt gemäss ISO 13320 (2009) mit Hilfe eines Malvern Mastersizer 2000 Messgerätes.

Bevorzugt liegt der Anteil an **Komponente (D)** im Bereich von 2 bis 6 Gew.-%, vorzugsweise im Bereich von 3 bis 5 Gew.-%, jeweils bezogen auf die Formasse (Summe A bis E).

Die Komponente (D) ist bevorzugt ein LDS-Additiv mit einem von Null verschiedenen Absorptionskoeffizienten für UV-, VIS- oder IR-Strahlung, welches unter Einwirkung von elektromagnetischer Strahlung, bevorzugt als Laserstrahlung, Metallkeime bildet, die in einem chemischen Metallisierverfahren die Abscheidung von Metallschichten zur Erzeugung von Leiterbahnen an den bestrahlten Stellen auf der Formteiloberfläche erleichtern und/oder ermöglichen und/oder verbessern, wobei das LDS-Additiv vorzugsweise eine Absorptionsfähigkeit im sichtbaren und infraroten Strahlungsbereich aufweist mit einem Absorptionskoeffizient von wenigstens 0.05, bevorzugt wenigstens 0.1 und insbesondere wenigstens 0.2, und/oder dass vorzugsweise ein Absorber vorgesehen ist, der die Strahlungsenergie auf das LDS-Additiv überträgt.

Die Komponente (D) ist bevorzugt ein LDS-Additiv mit einer mittleren Partikelgrösse (D50) im Bereich von 50 - 10000 Nanometer, bevorzugt 200 bis 5000 Nanometer und besonders bevorzugt 300 bis 4000 Nanometer, und/oder einem Aspektverhältnis von höchstens 10, insbesondere von höchstens 5. Der als Mass für die Partikelgrösse angegebene D50-Wert ist ein Maß für die mittlere Teilchengröße, wobei 50 Volumen-Prozent der Probe feiner und die anderen 50% der Probe grober sind als der D50-Wert (Median).

Bevorzugt handelt es sich bei Komponente (D) um ein LDS (Laser Direct Structuring)-Additiv ausgewählt aus der Gruppe der Metalloxide, insbesondere sogenannte Spinelle mit der allgemeinen chemischen Formel AB₂O₄ , wobei A für ein Metallkation mit der Wertigkeit 2 und B für ein Metallkation der Wertigkeit 3 steht. Dabei ist das Metallkation A bevorzugt ausgewählt aus der Gruppe bestehend aus Magnesium, Kupfer, Kobalt, Zink, Zinn, Eisen, Mangan und Nickel sowie Kombinationen davon, und das Metallkation B bevorzugt ausgewählt aus der Gruppe bestehend aus Mangan, Nickel, Kupfer, Kobalt, Zinn, Titan, Eisen, Aluminium und Chrom sowie Kombinationen davon.

Insbesondere bevorzugt ist das LDS-Additiv ein Kupfereisenspinell, ein kupferhaltiges Magnesiumaluminiumoxide, ein Kupfer-Chrom-Mangan-Mischoxid, ein Kupfer-Mangan-Eisen-Mischoxid, gegebenenfalls jeweils mit Sauerstofffehlstellen, oder Salze und Oxide des Kupfers, wie insbesondere Kupfer(I)oxid, Kupfer(II)oxid, basische Kupferphosphate, Kupfersulfat, sowie Metallkomplexverbindungen, insbesondere Chelatkomplexe von Kupfer, Zinn, Nickel, Cobalt, Silber und Palladium oder Mischungen solcher Systeme, und/oder insbesondere ausgewählt aus der folgenden Gruppe: Kupfer-Chrom-Mangan-Mischoxide, Kupfer-Mangan-Eisen-Mischoxide, Kupferchromoxid, Kupferwolframat, Zink-Eisenoxid, Kobalt-Chromoxid, Kobalt-Aluminiumoxid, Magnesiumaluminiumoxid, sowie Mischungen und/oder oberflächenbehandelte und/oder Sauerstofffehlstellen aufweisende Formen hiervon. Möglich sind z.B. Systeme, wie sie beispielsweise in WO-A-2000/35259 oder in Kunststoffe 92 (2002) 11, 2-7 beschrieben werden.

Ebenfalls bevorzugt wird als Komponente (D) ein LDS (Laser Direct Structuring)-Additiv ausgewählt aus der Gruppe der Metalloxide, Metallmischoxide, Metallhydroxidoxide, Metallsulfidoxide auf Basis von Zinn. Besonders bevorzugt ist Zinnoxid und dotiertes Zinnoxid, wobei die Dotierung mit Antimon, Wismut, Molybdän, Aluminium, Titan, Silicium, Eisen, Kupfer, Silber, Palladium und Kobalt erfolgen kann. Insbesondere wird Zinnoxid, das mit Antimon, Titan oder Kupfer dotiert ist, bevorzugt. Weiterhin werden Mischungen aus Zinnoxid und mindestens einem weiteren Metalloxid, insbesondere Antimonoxid als LDS-Additive bevorzugt. Als weiteres Metalloxide werden dabei sowohl farblose hochbrechende Metalloxide, wie insbesondere Titandioxid, Antimon(III)oxid, Zinkoxid, Zinnoxid und/oder Zirkoniumdioxid verwendet als auch farbige Metalloxide wie z.B. Chromoxid, Nickeloxid, Kupferoxid, Kobaltoxid und insbesondere Eisenoxid (Fe₂O₃, Fe₃O₄). Insbesondere bevorzugt wird die Mischung aus Zinnoxid und Antimon(III)oxid verwendet.

Vorzugsweise sind die dotierten Zinnoxide bzw. Metalloxid-Mischungen bzw. Zinnoxid als Schichten auf plättchenförmigen Substraten, insbesondere Schichtsilikaten, wie z.B. synthetischer oder natürlicher Glimmer, Talkum, Kaolin, Glasplättchen oder Siliciumdioxid-Plättchen, ausgebildet. Als Substrat für die Metalloxide werden insbesondere Glimmer bzw. Glimmerschuppen bevorzugt. Weiterhin kommen als Substrate auch plättchenförmige Metalloxide wie z. B. plättchenförmiges Eisenoxid, Aluminiumoxid, Titandioxid, Siliziumdioxid, LCP's (Liquid Crystal Polymers), holographische Pigmente oder beschichtete Graphitplättchen in Betracht.

Besonders bevorzugt werden LDS-Additive auf Basis von Glimmer, wobei die Glimmeroberfläche mit metalldotierten Zinnoxiden beschichtet ist. Insbesondere bevorzugt wird antimondotiertes Zinnoxid. Beispiele für kommerziell erhältliche LDS-Additive gemäss der vorliegenden Erfindung sind: Lazerflair LS820, LS825, LS830 und Minatec 230 A-IR der Firma Merck, Stanostat CP40W, Stanostat CP15G oder Stanostat CP5C der Firma Keeling&Walker, Fabulase 322S, 330, 350 und 352 von Budenheim.

Die insbesondere bevorzugten LDS-Additive sind Kupferchromit, Kupferwolframat, Kupferhydroxidphosphat und antimondotiertes Zinnoxid, wobei Letzteres bevorzugt in Kombination mit Glimmer Verwendung findet. Ganz besonders bevorzugt ist Kupferwolframat.

Die erfindungsgemäße Polyamid-Formmasse enthält 0 bis 5 Gew.-% mindestens eines Additivs als **Komponente (E),** welche verschieden von Komponente (A), (B), (C) und (D) ist.

Gemäß einer bevorzugten Ausführungsform enthält die erfindungsgemässe Formmasse 0.1 bis 5 Gew.-% und bevorzugt 0.2 bis 4 Gew.-%, bezogen auf die Summe der Komponenten (A) bis (E), mindestens eines Additivs als Komponente (E).

Nach einer bevorzugten Ausführungsform sind die Additive der Komponenten (E) ausgewählt aus der Gruppe bestehend aus Stabilisatoren, Alterungsschutzmittel, Antioxidantien, Antiozonantien, Verarbeitungsstabilisatoren, Verarbeitungshilfsmittel, Viskositätsmodifikator, Lichtschutzmittel, UV-Stabilisatoren, UV-Absorber, anorganische Hitzestabilisatoren, insbesondere auf Basis von Kupferhalogeniden und Alkalihalogeniden, organische Hitzestabilisatoren, optische Aufheller, Kristallisationsbeschleuniger, Kristallisationsverzögerer, Fliesshilfsmittel, Schmiermittel, Gleitmittel, Entformungsmittel, Färbemitteln, insbesondere Farbstoffen, anorganischen Pigmenten, organischen Pigmenten, Markierungsstoffe und Mischungen hiervon.

Nach einer besonders bevorzugten Ausführungsform enthält die erfindungsgemässe Formmasse als Komponente (E) mindestens ein Verarbeitungshilfsmittel, wobei dieses bevorzugt in einem Anteil von 0 bis 2 Gew.-% , insbesondere bevorzugt von 0.1 bis 2.0 Gew.-%, besonders bevorzugt von 0.1 bis 1.5 Gew.-% und am bevorzugtesten von 0.2 bis 1.0 Gew.-%, jeweils bezogen auf das Gesamtgewicht der Komponenten (A) bis (E), enthalten ist. Hierbei bevorzugt sind Al-, Alkali-, Erdalkalisalze, Ester oder Amide von Fettsäuren mit 10 bis 44 C-Atomen und vorzugsweise mit 14 bis 44 C-Atomen, wobei die Metallionen Na, Mg, Ca und Al bevorzugt und Ca oder Mg besonders bevorzugt sind. Besonders bevorzugte Metallsalze sind Magnesiumstearat, Calciumstearat und Calcium-Montanat sowie Aluminium-Stearat. Die Fettsäuren können 1- oder 2-wertig sein. Als Beispiele seien Pelargonsäure, Palmitinsäure, Laurinsäure, Margarinsäure, Dodecandisäure, Behensäure und die besonders bevorzugten Stearinsäure, Caprinsäure sowie Montansäure (Mischung von Fettsäuren mit 30 bis 40 C-Atomen), genannt.

Nach einer weiteren bevorzugten Ausführungsform enthält die erfindungsgemässe Formmasse als Komponente (E) mindestens einen Wärmestabilisator, wobei dieses bevorzugt in einem Anteil von 0 bis 3 Gew.-% , insbesondere bevorzugt von 0.1 bis 2.0 Gew.-%, jeweils bezogen auf das Gesamtgewicht der Komponenten (A) bis (E), enthalten ist.

Gemäß einer bevorzugten Ausführungsform sind die Wärmestabilisatoren ausgewählt aus der Gruppe bestehend aus:
- Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCI, CuBr, Cul, CuCN und Cu₂O, sowie die zweiwertigen Kupferverbindungen CuCl₂, CuSO₄, CuO, Kupfer(II)acetat oder Kupfer(II)stearat. Vorteilhafterweise werden die Kupferverbindungen in Kombination mit weiteren Metallhalogeniden, insbesondere Alkalihalogeniden, wie Nal, Kl, NaBr, KBr, eingesetzt, wobei das molare Verhältnis von Metallhalogenid zu Kupferhalogenid 0.5 bis 20, bevorzugt 1 bis 10 und besonders bevorzugt 3 bis 7 beträgt.
- Stabilisatoren auf Basis sekundärer aromatischer Amine, wobei diese Stabilisatoren vorzugsweise in einer Menge von 0.1 bis 2, bevorzugt von 0.2 bis 0.5 Gew.-% vorliegen,
- Stabilisatoren auf Basis sterisch gehinderter Phenole, wobei diese Stabilisatoren vorzugsweise in einer Menge von 0.1 bis 1.5, bevorzugt von 0.2 bis 0.6 Gew.-% vorliegen, und
- Phosphiten und Phosphoniten, sowie
- Mischungen der vorstehend genannten Stabilisatoren.

Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolen, Naugard 445, N,N'-Dinaphthyl-p-phenylendiamin, N-Phenyl-N'-cyclohexyl-p-phenylendiamin oder Mischungen davon.

Als sterisch gehinderte Phenole eignen sich prinzipiell alle Verbindungen mit phenolischer Struktur, die am phenolischen Ring mindestens eine sterisch anspruchsvolle Gruppe aufweisen. Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritol-diphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)-phosphit (Irgafos 168).

Eine bevorzugte Ausführungsform des Wärmestabilisators besteht in der Kombination von organischen Hitzestabilisatoren, insbesondere Irgafos 168 und Irganox 1010 oder HOSTANOX O 3 P (Bis[3,3-bis-(4'hydroxy-3'-tert-butyl-phenyl) butansäureglykolester) und SANDOSTAB P-EPQ (Tetrakis(2,4-di-tert-butylphenyl)-4,4'-biphenyldiphosphonit). Insbesondere bevorzugt ist eine Wärmestabilisierung ausschließlich auf Basis von Cul und Kl.

Als Beispiele für Oxidationsverzögerer und Wärmestabilisatoren seien Phosphite und weitere Amine (z.B. Triacetondiamin), Hydrochinone, verschiedene substituierte Vertreter dieser Gruppen und deren Mischungen in Konzentrationen bis zu 1 Gew.-%, bezogen auf das Gewicht der Komponenten (A) bis (D) genannt.

Als UV-Stabilisatoren, die im Allgemeinen in Mengen bis zu 2 Gew.-%, bezogen auf das Gewicht der Formmasse, verwendet werden, seien verschiedene substituierte Resorcine, Salicylate, Benzotriazole, -Triazine und Benzophenone genannt.

Es können anorganische Pigmente, wie Titandioxid, Ultramarinblau, Eisenoxid und Ruß und/oder Graphit, weiterhin organische Pigmente, wie Phthalocyanine, Chinacridone, Perylene sowie Farbstoffe, wie Nigrosin und Anthrachinone als Farbmittel zugesetzt werden. Es wird jedoch bevorzugt, wenn die erfindungsgemässe Formmasse weder Russ noch Graphit enthält, d.h. die erfindungsgemässe Formmasse ist bevorzugt frei von Russ und Graphit.

In einer besonders bevorzugten Ausführungsform besteht die erfindungsgemässe thermoplastische Formmasse aus:
(A) 24 bis 57.9 Gew.-% einer Mischung aus wenigstens einem Polyamid (A1), wenigstens einem Polyphenylenether (A2) und einem Verträglichkeitsvermittler (A3);
(B) 15 bis 35 Gew.-% Glasfaser, dessen Glas-Zusammensetzung 12 bis 24 Gew.-% Boroxid und 2 bis 14 Gew.-% für die Summe aus Magnesiumoxid und Calciumoxid umfasst;
(C) 25 bis 45 Gew.-% Metalltitanat, ausgewählt aus der Gruppe bestehend aus Barimtitanat, Strontiumtianat, Bariumstrontiumtitanat und Bariumneodymtitanat;
(D) 2 bis 6 Gew.-% LDS-Additiv, ausgewählt aus der Gruppe bestehend aus Kupferchromoxid, Kupferwolframat, Kupferoxid, Kupferhydroxydphosphat, Zinnhydroxydphosphat, Zinnphosphat, Kupferphosphat, basische Kupferphosphate und Zinnphosphate, oder Mischungen davon, bevorzugt ausgewählt als Kupferwolframat;
(E) 0.1 bis 5 Gew.-% Additive verschieden von (A), (B), (C) und (D);

wobei die Mischung (A) zu 52 bis 89.8 Gew.-% aus der Komponente (A2), zu 10 bis 45 Gew.-% aus der Komponente (A1), zu 0.2 bis 3 Gew.-% aus der Komponente (A3), jeweils bezogen auf die Summe der Komponenten (A1) bis (A3), besteht, wobei die Summe der Komponenten (A1) bis (A3) 100 Gew.-% der Mischung (A) ergibt;
und wobei die Summe aus (B) und (C) im Bereich von 40 bis 65 Gew.-%, bezogen auf die Summe (A) bis (E), liegt;
und wobei die Summe der Komponenten (A) bis (E) 100 Gew.-% der Formmasse ergibt.

Die erfindungsgemässen Formmassen haben gute mechanische Eigenschaften, lassen sich nach Bestrahlung gut metallisieren und zeichnen sich durch eine relative Permittivität von mindestens 5.0 und einem niedrigen dielektrischen Verlustfaktor (DVF) von kleiner als 0.008 aus.

Eine bevorzugte Variante der Herstellung der erfindungsgemässen Formmasse besteht darin, dass in einem ersten Schritt die Mischung, umfassend die Komponenten (A1) bis (A4), bereitgestellt wird. Dazu können die Komponenten (A2), (A3) und optional (A4) zunächst in den Einzug einem Extruder dosiert werden und bei einer Temperatur im Bereich von 220 bis 340 °C vermischt werden. Mittels eines Sidefeeders kann dann Komponente (A1) in ein dem Einzug nachgelagertes Gehäuse des Extruders in die Schmelzemischung, gebildet aus den Komponenten (A2) bis (A4), eingetragen werden. Alternativ können auch die Komponenten (A1) bis (A4) in den Einzug eines Extruder dosiert werden und bei einer Temperatur von 220 bis 340 °C im Extruder vermischt werden. Bei beiden Varianten können zusätzlich die Komponenten (D) und/oder (E) mit einbezogen werden, wobei diese Komponenten bevorzugt in den Einzug dosiert werden. In einem zweiten Extrusionsschritt kann dann die Mischung (A) sowie die Komponenten (D) und (E) bzw. die Mischung aus (A), (D) und (E) in den Einzug des Extruders dosiert und bei einer Temperatur von 220 - 340 °C aufgeschmolzen werden, während Komponente (B) und (C) dann über einen Sidefeeder in ein dem Einzug nachgelagertes Gehäuse des Extruders zugeführt und mit der vorliegenden Schmelze vermischt wird.

Eine weiteres bevorzugtes Herstellverfahren für die Formmasse besteht darin, dass die Komponenten (A1) bis (A4), (D) und (E) in den Einzug eines Extruder dosiert werden und in einem ersten Extruderabschnitt bei einer Temperatur von 220 bis 340 °C aufgeschmolzen und vermischt werden, bevor dann über einen Sidefeeder die Komponenten (B) und (C) in die Schmelze zugeführt und einem zweiten Extruderabschnitt mit den übrigen Komoponenten vermischt werden. Die Formmasse wird dann ausgetragen und nach Kühlung granuliert. Bei hohen Füllstoffgehalten wird die Unterwassergranulierung bevorzugt eingesetzt.

Weiterhin umfasst die Erfindung einen Formkörper, der die oben beschriebene, erfindungsgemässe thermoplastischen Formmasse enthält oder der bevorzugt aus dieser Formmasse besteht.

Bei diesem Formkörper handelt es sich bevorzugt um Komponenten, Gehäuse oder Gehäuseteile von mit elektromagnetischen Wellen mit einer Frequenz von 0,3 bis 300 GHz kommunizierenden Geräten handelt.

Insbesondere sind die Formkörper ausgewählt aus der Gruppe bestehend aus Komponenten, Gehäusen oder Gehäuseteilen von Sende- und Empfangsgeräten, Mobiltelefonen, Tabletts, Laptops, Navigationsgeräten, Überwachungskameras, Fotokameras, Sensoren, Tauchcomputern, Audioanlagen, Fernbedienungen, Lautsprechern, Kopfhörern, Radiogeräten, Fernsehgeräten, Haushaltsgeräten, Küchengeräten, Tür- oder Toröffnern, Bediengeräten für die Zentralverriegelung bei Fahrzeugen, Keyless-go-Fahrzeugschlüsseln, Temperaturmess- bzw. Temperaturanzeigegeräten, Messgeräten und Steuergeräten.

### WEGE ZUR AUSFÜHRUNG DER ERFINDUNG

### Messmethoden:

Im Rahmen dieser Anmeldung wurden die folgenden Messmethoden verwendet:

### Relative Viskosität

Die relative Viskosität (RV) wurde gemäß ISO 307 (2007) bei 20 °C bestimmt. Dazu wurden 0.5 g Polymergranulat in 100 ml m-Kresol eingewogen, die Berechnung der relativen Viskosität (RV) nach RV = t/t0 erfolgte in Anlehnung an Abschnitt 11 der Norm.

### Glasübergangstemperatur (Tq) und Schmelzpunkt (Tm)

Die Bestimmung der Glasübergangstemperatur und des Schmelzpunkts erfolgte nach ISO 11357-2 und -3 (2013) an Granulat. Die Differential Scanning Calorimetry (DSC) wurde bei jeder der drei Aufheizungen mit einer Aufheizrate von 20 K/min durchgeführt. Nach der ersten Aufheizung wurde die Probe mit einer Rate von 20 K/min abgekühlt und beim anschliessenden Aufheizen (zweite Aufheizung) der Schmelzpunkt bestimmt. Danach wurde die Probe in Trockeneis abgeschreckt und die Glasübergangstemperatur (Tg) wurde bei der dritten Aufheizung bestimmt. Als Schmelzpunkt wurde die Temperatur am Peakmaximum angegeben. Der Mittelpunkt des Glasübergangsbereichs, welcher als Glasübergangstemperatur (Tg) angegeben wurde, wurde nach der Methode "Half Height" ermittelt.

### Zug-E-Modul

Die Bestimmung des Zug-E-Moduls wurde gemäß ISO 527 (2012) bei 23°C mit einer Zuggeschwindigkeit von 1 mm/min an einem ISO-Zugstab (Typ A1, Masse 170 x 20/10 x 4) hergestellt gemäß der Norm: ISO/CD 3167 (2003), durchgeführt.

### Bruchspannung und Bruchdehnung

Die Bestimmung von Bruchspannung und Bruchdehnung wurden gemäß ISO 527 (2012) bei 23°C mit einer Zuggeschwindigkeit von 5 mm/min bei verstärkten Materialien an einem ISO-Zugstab, Typ A1 (Masse 170 x 20/10 x 4 mm), hergestellt gemäß der Norm ISO/CD 3167 (2003), durchgeführt.

### Relative Permittivität und dielektrischer Verlustfaktor (DVF)

Die Messung der relativen Permittivität εr und des dielektrischen Verlustfaktors (DVF) erfolgt nach IEC 61189-2-721 (2015) an 80 x 80 x 3 mm Platten mit Filmanguss mit einem Split Post Dielectric Resonator (SPDR) der Firma QWED, Polen (Broschüre, inklusive Informationen zur Messung erhältlich unter www.qwed.eu). Die Messfrequenz beträgt 2,45 GHz, die Messtemperatur 23 °C.

### Spritzschwund

Die Herstellung der Platten (Typ D2, 60 x 60 x 2 mm, Filmanguss) zur Bestimmung des Spritzschwunds erfolgte gemäss ISO 294-3 (2002) und Amendment 1 (2006). Der Spritzschwund wurde gemäß ISO 294-4 (2001) nach Lagerung der Platten für 14 Tage im Normklima (23 °C, 50 % relative Feuchte) in Bezug auf die Formnestgrösse bestimmt und zwar längs und quer zur Fliessrichtung der Formmassenschmelze. Angegeben ist der arithmetische Mittelwert aus den Messungen an 5 Platten. Das Verhältnis aus dem Spritzschwund längs und quer zur Fliessrichtung der Formmassenschmelze wird im Folgenden auch als Verzug bezeichnet.

### Laserstrukturierung und Metallisierbarkeit:

Zur Beurteilung des Metallisierungsverhaltens wurden spritzgegossene Formteile (Platte 60 x 60 x 2 mm) mit Hilfe eines Nd:YAG-Lasers strukturiert und nachfolgend stromlos im Verkupferungsbad metallisiert. Bei der Laserstrukturierung wurden auf der Formteiloberfläche 16 nebeneinanderliegende, 10 x 10 mm grosse Bereiche bestrahlt. Die Laserstrukturierung erfolgte mittels eines FOBA DP50 Lasers bei einer Wellenlänge von 1064 nm und einer Bestrahlungsbreite von circa 50 µm bei einer Geschwindigkeit von 4 m/s. Dabei wurde sowohl die Pulsfrequenz als auch die Stromstärke des Lasers variiert. Für die konkreten Pulsfrequenzen von 5, 6, 7 und 8 kHz wurde der Diodenstrom des Lasers jeweils auf 24.0, 24.5, 25.0 und 25.5 Ampere eingestellt. Im Anschluss an die Laserstrukturierung wurden die Formteile einem Reinigungsprozess zur Entfernung der Rückstände des Laserprozesses unterworfen. Die Formteile durchliefen dabei nacheinander Ultraschallbäder mit Tensid und deionisiertem Wasser. Die gereinigten Formteile wurden sodann in einem reduktiven Verkupferungsbad (MacDermid MID-Copper 100 B1) für 20 - 30 Minuten metallisiert.

Beurteilung der Metallisierbarkeit:
∘: in weniger als 14 Bereichen wurde Kupfer in einer durchschnittlichen Dicke von mindestens 3 µm abgeschieden;
+: in 14 oder 15 Bereichen wurde Kupfer in einer durchschnittlichen Dicke von mindestens 3 µm abgeschieden;
++: in allen 16 Bereichen wurde Kupfer in einer durchschnittlichen Dicke von mindestens 3 µm abgeschieden;
Ausreichend metallisert bedeutet im Sinne der Erfindung, dass in mindestens 14 Bereichen Kupfer in einer durchschnittlichen Dicke von mindestens 3 µm abgeschieden wird.

### Glas-Zusammensetzung des Glasfüllstoffes

Die Glas-Zusammensetzung des Glasfüllstoffes, insbesondere der Glasfasern, wurde anhand folgender Bestimmungsmethoden ermittelt: Optische Emissionsspektrometrie mit induktiv gekoppeltem Plasma (ICP OES) gemäss DIN 51086-2:2004, Titrimetrische Bestimmung des Gehaltes an Boroxid gemäss ISO 21078-1:2008, Röntgenfluoreszenz-Schmelzaufschluss-Verfahren gemäss ISO 12677:2003, Fluorbestimmung nach Pyrohydrolyse gemäss DIN 51084:2008.

### Herstellung der Polyamid-Formmassen

Für die erfindungsgemässen Beispiele B1 bis B3 wurden zunächst die verschiedenen Mischungen (A) hergestellt. Dazu wurde gemäss Tabellen 2 die jeweilige Menge an Polyphenylenether (A2) und an Verträglichkeitsvermittler (A3) in die Einzugszone eines Zweiwellenextruders der Firma Werner & Pfleiderer Typ ZSK 25 dosiert und die Polyamid-Komponente (A1) über einen Sidefeeder 6 Gehäusezonen vor dem Austritt in die Schmelze eingetragen. Die Temperatur des ersten Gehäuses wurde auf 70 °C eingestellt, diejenige der restlichen Gehäuse für die Beispiele mit Polyamid-1 auf 260 bis 290 °C und für die Beispiele mit Polyamid-2 auf 290 bis 320°C. Es wurde eine Drehzahl von 300 U/min und ein Durchsatz von 10 kg/h verwendet und atmosphärisch entgast. Die Stränge wurden im Wasserbad abgekühlt, geschnitten und das erhaltene Granulat bei 100 °C für 24 h im Vakuum (30 mbar) getrocknet. Dann wurden die getrockneten Granulate der Mischung (A), der Polyamide oder Polyphenylenether zusammen mit den Zusatzstoffen (C), (D) und (E) zu einem Dryblend vermischt, und zwar in dem in den Tabelle 2 angegebenen Verhältnis. Diese Mischung wurde mittels eines Taumelmischers ca. 20 Minuten lang homogenisiert. Die Formmassen wurde auf einem Zweiwellenextruder der Firma Feddem GmbH & Co.KG Typ FED 26 MTS in dem in Tabellen 2 angegebenen Verhältnis hergestellt. Das Dryblend wurde dabei über eine Dosierwaage in den Einzug dosiert. Die Glasfasern (B) wurden über eine Dosierwaage in einen Sidefeeder dosiert, der die Glasfasern (B) sechs Gehäuseeinheiten vor der Düse in die Schmelze förderte. Die Temperatur des ersten Gehäuses wurde auf 80 °C eingestellt, diejenige der restlichen Gehäuse auf 260 bis 280 °C für die Beispiele B2, B3 und VB2 sowie auf 280 bis 310 °C für die Beispiele B1 und VB2. Es wurde eine Drehzahl von 250 U/min und ein Durchsatz von 15 kg/h verwendet und atmosphärisch entgast. Die Stränge wurden mittels einer Unterwassergranulierung abgekühlt, geschnitten und das erhaltene Granulat bei 110 °C für 24 h im Vakuum (30 mbar) auf einen Wassergehalt unter 0.1 Gew.-% getrocknet.

### Herstellung der Prüfkörper

Die Prüfkörper wurden auf einer Spritzgussmaschine der Firma Arburg, Modell Allrounder 420 C 1000-250 hergestellt. Dabei wurden aufsteigende Zylindertemperaturen von 260 °C bis 280 °C und eine Formtemperatur von 80 °C bei den Beispielen B2, B3 und VB2 sowie Zylindertemperaturen von 290 bis 320 °C und eine Formtemperatur von 120 °C bei den Beispielen B1, und VB1 verwendet. Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel gelagert.

**Tabelle 1: In den Beispielen und Vergleichsbeispielen verwendete Materialien**

| **Komponenten** | **Beschreibung** | **Hersteller** |
|---|---|---|
| Polyamid-1 (Komponente A1) | Polyamid 12 aus Laurinlactam, RV = 1.90, Tm = 178 °C | EMS-CHEMIE AG, Schweiz |
| Polyamid-2 (Komponente A1) | Polyamid 10T/6T aus 1,6-Hexandiamin, 1,10-Decandiamin u. Terephthalsäure RV = 1.78, Tm = 295 °C | EMS-CHEMIE AG, Schweiz |
| Polyphenylenether (Komponente A2) | IUPIACE PX100F, Poly(oxy-2,6-dimethyl-1,4-phenylen), CAS-Nr.: 25134-01-4; RV = 1.12 | Mitsubishi Engineering Plastics Corporation, Japan |
| Verträglichkeitsvermittler (Komponente A3) | Maleinsäureanhydrid, CAS-Nr.: 108-31-6 | Lanxess, Deutschland |
| Glasfaser Typ 1 (Komponente B, Erfindungsgemässe Glasfaser) | NITTOBO CNG3PA-820, flache Glasfaser, Länge = 3 mm, Hauptquerschnittachse 28 mm, Nebenquerschnittachse 7 mm, Aspektverhältnis der Querschnittachsen = 4, Glaszusammensetzung: Mg-Oxid + Ca-Oxid = 8.3 Gew.-%, Boroxid = 19.4 Gew.-%, RP = 4.8, DVF = 0.0015 | Nitto Boseki Co., LTD., Japan |
| Glasfaser Typ 2 (nicht erfindungsgemässe Glasfaser) | NITTOBO CSG3PA-820, flache Glasfaser, Länge = 3 mm, Hauptquerschnittachse 28 mm, | Nitto Boseki Co., LTD., Japan |
| | Nebenquerschnittachse 7 mm, Aspektverhältnis der Querschnittachsen = 4, Glaszusammensetzung: Mg-Oxid + Ca-Oxid = 23.6 Gew.-%, Boroxid = 6.1 Gew.-%, RP = 6.8, DVF = 0.0035 | |
| BST (Komponente C) | Barium-Strontium-Titanat mit Mol-Verhältnis Ba:Sr = 70:30, CAS-Nr.: 12430-73-8 | Thermograde Process Technology Ltd. |
| LDS Additiv (Komponente D) | SHEPHERD Black 30C965, Kupferchromit (CuCr₂O₄) mit einer mittleren Partikelgrösse (D50) von 0.6 µm | The Shepherd Color Company, USA |
| Stabilisator (Komponente E) | Mischung aus | Clariant Produkte AG, Schweiz |
| | D1: HOSTANOX O 3 P, Bis[3,3-bis-(4'hydroxy-3'-tert-butyl-phenyl) butansäureglykolester, CAS-Nr.: 32509-66-3 | |
| | D2: SANDOSTAB P-EPQ, Tetrakis(2,4-di-tert-butylphenyl)-4,4'-biphenyldiphosphonit, CAS-Nr. 119345-01-6 | |
| | D3: HOSTAVIN N 30 P, HALS (Hindered Amine Light Stabilizer), CAS-Nr.: [202483-55-4 | |
| | im Verhältnis 4 : 1 : 2 (D1 : D2 : D3) | |
| Verarbeitungshilfsmittel (Komponente E) | Magnesiumstearat AV | Baerlocher GmbH, Deutschland |

| | | |
|---|---|---|
| RP = Relative Permittivität; DVF = Dielektrischer Verlustfaktor | | |

**Tabelle 2: Ergebnisse**

| | **Einheit** | **B1** | **VB1** | **B2** | **B3** | **VB2** |
|---|---|---|---|---|---|---|
| Mischung (A) | Gew.-%¹⁾ | 35.1 | 35.1 | 35.1 | 29.1 | 35.1 |
| Polyamid-1 (A1) | Gew.-%²⁾ | 0 | 0 | 30 | 30 | 0 |
| Polyamid-2 (A1) | Gew.-% ²⁾ | 30 | 100 | 0 | 0 | 0 |
| Polyphenylenether (A2) | Gew.-% ²⁾ | 68 | 0 | 68 | 68 | 100 |
| Verträglichkeitsvermittler (A3) | Gew.-% ²⁾ | 2 | 0 | 2 | 2 | 0 |
| Glasfaser Typ 1 (B) | Gew.-% ¹⁾ | 20.0 | 20.0 | 20.0 | 20.0 | 20.0 |
| | | | | | | |
| BST (C) | Gew.-% ¹⁾ | 40.0 | 40.0 | 40.0 | 46.0 | 40.0 |
| LDS-Additiv (D) | Gew.-% ¹⁾ | 4.0 | 4.0 | 4.0 | 4.0 | 4.0 |
| Stabilisierung (E) | Gew.-% ¹⁾ | 0.7 | 0.7 | 0.7 | 0.7 | 0.7 |
| Verarbeitungshilfsmittel (E) | Gew.-% ¹⁾ | 0.2 | 0.2 | 0.2 | 0.2 | 0.2 |
| Summe (B) und (C) | Gew.-% ¹ | 60 | 60 | 60 | 66 | 60 |
| | | | | | | |
| Zug-E-Modul | MPa | 10350 | 10950 | 9000 | 9500 | 10100 |
| Bruchspannung | MPa | 78 | 111 | 74 | 77 | 83 |
| Bruchdehnung | % | 1.0 | 1.3 | 1.2 | 1.1 | 0.8 |
| Spritzschwund, längs | % | 0.45 | 0.33 | 0.69 | 0.69 | 0.52 |
| Spritzschwund, quer | % | 0.57 | 0.73 | 0.77 | 0.72 | 0.85 |
| Verzug³⁾ | - | 1.30 | 2.21 | 1.12 | 1.04 | 1.63 |
| Relative Permittivität | - | 5.9 | 7.0 | 5.4 | 6.5 | 6.7 |
| Dielektrischer Verlustfaktor | - | 0.0068 | 0.0181 | 0.0058 | 0.0077 | 0.0052 |
| Verarbeitung | - | ++ | + | ++ | ++ | + |
| Metallisierbarkeit | - | ++ | ++ | ++ | ++ | + |

| | | | | | | |
|---|---|---|---|---|---|---|
| ¹⁾ bezogen auf die Formmasse (Summe (A) bis (E)) ²⁾ bezogen auf die Summe (A1) bis (A3); A4 = 0 Gew.-%) ³⁾ Verzug = Verhältnis Spritzschwund quer zu längs | | | | | | |

## Patentansprüche

1. Thermoplastische Formmasse bestehend aus:
A Mischung aus wenigstens einem Polyamid A1, wenigstens einem Polyphenylenether A2 sowie optional einem Verträglichkeitsvermittler A3 und optional einem olefinischen und/oder vinylaromatischen Polymeren A4;
B 10 bis 40 Gew.-% Glasfüllstoff, dessen Glas-Zusammensetzung mindestens 10.0 Gew.-% Boroxid und höchstens 15 Gew.-% für die Summe aus Magnesiumoxid und Calciumoxid umfasst;
C 20 bis 50 Gew.-% Salze der Titansäuren, Salze der Zinnsäuren, Salze der Zirkonsäuren oder Mischungen davon;
D 1 bis 8 Gew.-% LDS-Additiv;
E 0 bis 5 Gew.-% Additive, verschieden von den Komponenten A, B, C und D;
wobei die Mischung A zu 80 bis 100 Gew.-% aus einer Mischung M der Komponenten A1, A2 und A3 und zu 0 bis 20 Gew.-% aus der Komponente A4, jeweils bezogen auf die Summe der Komponenten M und A4, besteht, und wobei die Summe der Komponenten M und A4 100 Gew.-% der Mischung A ergibt;
und wobei die Mischung M zu 36 bis 92 Gew.-% aus der Komponente A2, zu 8 bis 60 Gew.-% aus der Komponente A1 und zu 0 bis 4 Gew.-% aus der Komponente A3, jeweils bezogen auf die Summe der Komponenten A1 bis A3, besteht, und wobei die Summe der Komponenten A1 bis A3 100 Gew.-% der Mischung M ergibt;
und wobei die Summe aus B und C im Bereich von 35 bis 70 Gew.-%, bezogen auf die Summe A bis E, liegt;
und wobei die Summe der Komponenten A bis E 100 Gew.-% der Formmasse ergibt.

2. Thermoplastische Formmasse gemäss Anspruch 1, **dadurch gekennzeichnet, dass**
die Komponente A1 in der Mischung M in einem Anteil von 10 bis 48 Gewichtsprozent, besonders bevorzugt von 10 bis 45 Gewichtsprozent, bezogen auf die Summe A1 bis A3, vorliegt;
und die Komponente A2 in der Mischung M in einem Anteil von 48 bis 89.9 Gewichtsprozent, besonders bevorzugt von 52 bis 89.8 Gewichtsprozent, bezogen auf die Summe A1 bis A3, vorliegt;
und die Komponente A3 in der Mischung M in einem Anteil von 0.1 bis 4 Gewichtsprozent, besonders bevorzugt von 0.2 bis 3 Gewichtsprozent, bezogen auf die Summe A1 bis A3, vorliegt;
und/oder die Mischung A ausschliesslich aus den Komponenten A1 bis A3 besteht.

3. Thermoplastische Formmasse gemäss einem der vorhergehenden Ansprüche, **dadurch gekennzeichnet, dass** der Glasfüllstoff B basiert auf Glas, dessen Zusammensetzung
2 bis 14 Gew.-%, besonders bevorzugt 4 bis 12 Gew.-% für die Summe der Magnesiumoxid- und Calciumoxid-Gehalte, bezogen auf die Zusammensetzung des Glases, umfasst;
und/oder
12 bis 24 Gew.-%, besonders bevorzugt 15 bis 22 Gew.-%, Boroxid, bezogen auf die Zusammensetzung des Glases, umfasst;
oder
52.0 bis 57.0 Gew.-% Siliciumdioxid, 13.0 bis 17.0 Gew.-% Aluminiumoxid, 15.0 bis 21.5 Gew.-% Boroxid, 2.0 bis 6.0 Gew.-% Magnesiumoxid, 2.0 bis 6.0 Gew.-% Calciumoxid, 1.0 bis 4.0 Gew.-% Titandioxid, 0 bis 1.5 Gew.-% Fluor, 0 bis 0.6 Gew.-% Alkalioxide umfasst.

4. Thermoplastische Formmasse gemäss Anspruch 3, **dadurch gekennzeichnet, dass** der Glasfüllstoff B ausgewählt ist
aus der Gruppe bestehend aus Fasern, gemahlenen Fasern, Partikeln, Flakes, Kugeln, Hohlkugeln oder aus Kombinationen aus den vorgenannten;
oder
als Glasfasern;
oder
als Glasfasern mit nicht-kreisförmigem Querschnitt und einem Achsenverhältnis von Haupt- zu Nebenquerschnittsachse im Bereich von 2 bis 6, bevorzugt von 3 bis 5.

5. Thermoplastische Formmasse gemäss einem der vorhergehenden Ansprüche, **dadurch gekennzeichnet, dass** das wenigstens eine Polyamid A1 ausgewählt ist als
aliphatisches Polyamid aus der Gruppe bestehend aus: PA 46, PA 6, PA 66, PA 6/66, PA 10, PA 11, PA 12, PA516, PA610, PA612, PA 614, PA616, PA618, PA 1010, PA 1012, PA 1014, PA 1016, PA 1018, PA 1212 und Mischungen davon, , wobei PA610, PA 612, PA 1010, PA12 und PA 616 bevorzugt sind;
und/oder
teilkristallines teilaromatisches Polyamide aus der Gruppe bestehend aus: PA 4T/4I, PA 4T/6I, PA 5T/5I, PA 6T/6, PA 6T/6I, PA 6T/6I/6, PA 6T/66, 6T/610, 6T/612, PA 6T/10T, PA 6T/10I, PA 9T, PA 10T, PA 12T, PA 10T/10I, PA10T/106, PA10T/610, PA10T/612, PA10T/66, PA10T/6, PA10T/1010, PA10T/1012, PA10T/12, PA10T/11, PA 6T/9T, PA 6T/12T, PA 6T/10T/6I, PA 6T/6I/6, PA 6T/6I/12 sowie Mischungen davon, wobei PA 6T/6I, PA 6T/10T, PA 6T/10T/6I und Mischungen davon bevorzugt sind;
und/oder
amorphes oder mikrokristallines Polyamid aus der Gruppe bestehend aus: PA 6I/6T, PA MACM9, PA MACM10, PA MACM12, PA MACM13, PA MACM14, PA MACM16, PA MACM17, PA MACM18, PA PACM10, PA PACM12, PA PACM13, PA PACM14, PA PACM16, PA PACM17, PA PACM18, PA TMDC10, PA TMDC12, PA TMDC13, PA TMDC14, PA TMDC16, PA TMDC17, PA TMDC18, PA MACM10/10, PA MACMI/12, PA MACMT/12, PA 6I/MACMI/MACMT, PA MACMI/MACMT/12, PA MACMI/MACMT/MACM12, PA MACMI/MACMT/MACM12/12, PA 6I/6T/MACMI/MACMT/12, PA 6I/6T/MACMI, PA MACMI/MACM36, PA MACMT/MACM36, PA MACMI/MACM12, PA MACMT/MACM12, PA MACM6/11 PA MACM10/10, PA MACM12/PACM12, PA MACM14/PACM14, PA MACM18/PACM18 und Mischungen daraus, wobei PA 6I/6T, PA MACM12, PA MACM14, PA TMDC12, PA TMDC14, PA MACMI/12, PA 6I/6T/MACMI/MACMT, PA MACMI/MACMT/12, PA MACMI/ MACMT/MACM12, PA 6I/6T/MACMI/MACMT/12, PA MACM10/10, PA MACM12/PACM12, PA MACM14/PACM14, PA MACM18/PACM18 und Mischungen daraus. Ganz besonders bevorzugt sind PA 6I/6T, PA MACM12, PA MACMI/12, PA MACMI/MACMT/12, PA MACMI/MACMT/MACM12, PA MACM12/PACM12 und Mischungen davon.

6. Thermoplastische Formmasse gemäss einem der vorhergehenden Ansprüche, **dadurch gekennzeichnet, dass** der Polyphenylenether der Komponente A2 ausgewählt ist aus der Gruppe bestehend aus Poly(2,6-dimethyl-1,4-phenylen)ether, Poly(2,6-diethyl-1,4-phenylen)ether, Poly(2-methyl-6-ethyl-1,4-phenylen)ether, Poly(2-methyl-6-propyl-1,4-phenylen)ether, Poly(2,6-dipropyl-1,4-phenylen)ether, Poly(2-ethyl-6-propyl-1,4-phenylen)ether oder Copolymere oder Mischungen davon.

7. Thermoplastische Formmasse gemäss einem der vorhergehenden Ansprüche, **dadurch gekennzeichnet, dass** Komponente A3 ausgewählt ist als
ein Verträglichkeitsvermittler;
oder
eine Mischung aus einem Verträglichkeitsvermittler und einem Radikalstarter;
und/oder
ein Verträglichkeitsvermittler ausgewählt ist aus der Gruppe bestehend aus Maleinsäure, Maleinsäureanhydrid, Fumarsäure, Acrylsäure, Methacrylsäure, Methylmaleinsäure, Methylmaleinsäureanhydrid, Itakonsäure, Itakonsäureanhydrid, Butenylbernsteinsäure, Butenylbernsteinsäureanhydrid, Tetrahydrophthalsäure, Tetrahydrophthalsäureanhydrid N-Phenylmaleinimid, Zitronensäure, Apfelsäure und 2-Hydroxynonadecan-1,2,3-tricarbonsäure, die Mono- oder Diester der genannten Säuren mit C1- bis C12-Alkoholen wie Methanol oder Ethanol, die Mono- oder Diamide der genannten Säuren, die am Stickstoff ggf. mit Alkyl- oder Arylresten mit bis zu 12 C-Atomen substituiert sein können und die Salze mit Alkali- oder Erdalkalimetallen wie z.B. Calcium und Kalium;
und/oder
ein Radikalstarter ausgewählt ist aus der Gruppe bestehend aus 1,1-Di-tert-butyl-peroxy-3,3,5-trimethylcyclohexan, Tert-butyl-peroxy-isopropyl-carbonate, Tert-butyl-peroxy-3,3,5-trimethylhexoate, Tert-butyl-peracetat, Tert-butyl-perbenzoat, 4,4-Di-tert-butyl-peroxy-valeriansäure-n-butylester, 2,2-Di-tert-butyl-peroxy-butan, Dicumylperoxid, Tert-butyl-cumyl-peroxid, 1,3-Bis(tert-butyl-peroxyisopropyl)benzol, Di-tert-butylperoxid.

8. Thermoplastische Formmasse gemäss einem der vorhergehenden Ansprüche, **dadurch gekennzeichnet, dass** die olefinischen und/oder vinylaromatischen Polymere A4
ausgewählt sind aus der Gruppe bestehend aus: Styrol-Ethylen-Butylen-Styrol-Blockcopolymeren, Styrol-Ethylen-Propylen-Styrol-Blockcopolymeren, Styrol-Butadien-Styrol-Blockcopolymeren, Styrol-Styrol-Butadien-Styrol-Blockcopolymeren, Polyethylen, Polypropylen, Polybutadien, Poly-4-methylpenten, Ethylen-Propylen-Copolymere, Ethylen-Buten-Copolymer, Ethylen-Methylhexadien-Copolymere, Propylen-Methylhexadien-Copolymere, Ethylen-Octen-Copolymer, Ethylen-Propylen-Buten-Copolymere, Ethylen-Propylen-Hexen-Copolymere, Ethylen-Propylen-Methylhexadien-Copolymere, Poly-(ethylen-vinylacetat), Ethylen-Ethylacrylat-Copolymer, Ethylen-Hexen-Copolymer, Ethylene-Propylen-Dien-Terpolymere sowie Mischungen aus diesen Polymermaterialien;
und/oder
mit Carbonsäure- oder Carbonsäureanhydrid-Gruppen gepfropft sind;
und/oder
mit Acrylsäure, Methacrylsäure oder Maleinsäureanhydrid gepfropft sind, wobei der Pfropfgrad 0.1 bis 4.0, bevorzugt 0.4 bis 2.5 und besonders bevorzugt 0.5 bis 2.0 Gewichtsprozent, bezogen auf das gepfropfte Polymer A4, beträgt.

9. Thermoplastische Formmasse nach einem der vorhergehenden Ansprüche, **dadurch gekennzeichnet, dass** Komponente C
ein Metalltitanat ist, wobei das Metall ausgewählt ist aus der Gruppe bestehend aus Barium, Strontium, Calcium, Magnesium, Blei, Zirkon, Mangan, Neodym, Wismut, Hafnium, Zinn und Zink, und wobei die genannten Metalle allein oder in Kombination in den Titanaten enthalten sind;
oder
ein Metalltitanat, ausgewählt aus der Gruppe bestehend aus Bariumtitanat, Strontiumtianat, Bariumstrontiumtitanat und Bariumneodymtitanat, ist.

10. Thermoplastische Formmasse nach einem der vorhergehenden Ansprüche, **dadurch gekennzeichnet, dass** Komponente D mindestens ein LDS-Additiv auf Basis des Kupfers und/oder Zinns enthält oder ganz gebildet wird durch ein LDS-Additiv auf Basis des Kupfers und/oder Zinns, ausgewählt aus der folgenden Gruppe: Metalloxid, Metallphosphat, vorzugsweise basisches Metallphosphat und/oder Metallhydroxidphosphat, wobei vorzugsweise Komponente (D) mindestens ein LDS-Additiv enthält oder ganz gebildet wird durch ein LDS-Additiv ausgewählt aus der folgenden Gruppe: Zinnoxid; Metall- oder Metalloxid-dotiertes Zinnoxid; Antimondotiertes Zinnoxid; Metalloxidbeschichteter Glimmer; mit Antimon-dotiertem Zinnoxid beschichteter Glimmer; Mischung aus Zinnoxid und Antimonoxid und optional weiterer Metalloxide; Spinelle; Kupferchromoxid; Kupferwolframat, Kupferoxid; Kupferhydroxid; Kupferhydroxidphosphat; Kupferphosphat; basische Kupferphosphate; Kupfer-Zinn-Phosphat; basisches Kupfer-Zinn-Phosphat; Zinnphosphat; basisches Zinnphosphat; antimondotiertes Zinnoxid, bevorzugt in Kombination mit Glimmer; oder Mischungen und Kombinationen davon;
oder
aus der Gruppe bestehend aus Kupferchromoxid, Kupferwolframat, Kupferoxid, Kupferhydroxydphosphat, Zinnhydroxydphosphat, Zinnphosphat, Kupferphosphat, basische Kupferphosphate und Zinnphosphate, oder Mischungen davon;
oder
als Kupferwolframat.

11. Thermoplastische Formmasse gemäss einem der vorhergehenden Ansprüche, **dadurch gekennzeichnet, dass** die Additive der Komponenten E ausgewählt sind aus der Gruppe bestehend aus: Stabilisatoren, Alterungsschutzmittel, Antioxidantien, Antiozonantien, Verarbeitungsstabilisatoren, Verarbeitungshilfsmittel, Viskositätsmodifikator, Lichtschutzmittel, UV-Stabilisatoren, UV-Absorber, anorganische Hitzestabilisatoren, insbesondere auf Basis von Kupferhalogeniden und Alkalihalogeniden, organische Hitzestabilisatoren, optische Aufheller, Kristallisationsbeschleuniger, Kristallisationsverzögerer, Fliesshilfsmittel, Schmiermittel, Gleitmittel, Entformungsmittel, Färbemitteln, insbesondere Farbstoffen, anorganischen Pigmenten, organischen Pigmenten, Markierungsstoffe und Mischungen hiervon.

12. Thermoplastische Formmasse gemäss einem der vorhergehenden Ansprüche, **dadurch gekennzeichnet, dass** der Anteil an
Komponente A in einem Bereich von 24 bis 57.9 Gew.-%, vorzugsweise von 31 bis 51.8 Gew.-%, bezogen auf die Summe der Komponenten A bis E, enthalten ist;
und/oder
Komponente B in einem Bereich von 15 bis 35 Gew.-%, vorzugsweise 18 bis 32 Gew.-%, bezogen auf die Summe der Komponenten A bis E, enthalten ist;
und/oder
Komponente C in einem Bereich von 25 - 45 Gew.-%, vorzugsweise in einem Bereich von 30 - 42 Gew.-%, bezogen auf die Summe der Komponenten A bis E, vorliegt;
und/oder
der Summe der Komponenten B und C im Bereich von 40 bis 65 Gew.-%, vorzugsweise im Bereich von 45 bis 60 Gew.-%, bezogen auf die Summe der Komponenten A bis E, enthalten ist;
und/oder
Komponente D im Bereich von 2 bis 6 Gew.-% liegt, vorzugsweise im Bereich von 3 bis 5 Gew.-%, bezogen auf die Summe der Komponenten A bis E, enthalten ist;
und/oder
Komponente E im Bereich von 0.1 bis 5 Gew.-%, vorzugsweise 0.2 bis 4 Gew.-%, bezogen auf die Summe der Komponenten A bis E, enthalten ist.

13. Formkörper, der eine Formmasse nach einem der Ansprüche 1 bis 12 enthält, oder bevorzugt aus dieser Formmasse besteht.

14. Formkörper nach Anspruch 13 **dadurch gekennzeichnet, dass** es sich bei dem Formkörper um Komponenten, Gehäuse oder Gehäuseteile von mit elektromagnetischen Wellen mit einer Frequenz von 0,3 bis 300 GHz kommunizierenden Geräten handelt.

15. Formkörper nach Anspruch 14 **dadurch gekennzeichnet, dass** der Formkörper ausgewählt ist aus der Gruppe bestehend aus Komponenten, Gehäusen oder Gehäuseteilen von Sende- und Empfangsgeräten, Mobiltelefonen, Tabletts, Laptops, Navigationsgeräten, Überwachungskameras, Fotokameras, Sensoren, Tauchcomputern, Audioanlagen, Fernbedienungen, Lautsprechern, Kopfhörern, Radiogeräten, Fernsehgeräten, Haushaltsgeräten, Küchengeräten, Tür- oder Toröffnern, Bediengeräten für die Zentralverriegelung bei Fahrzeugen, Keyless-Go-Fahrzeugschlüsseln, Temperaturmess- bzw. Temperaturanzeigegeräten, Messgeräten und Steuergeräten.

## Claims

1. A thermoplastic molding composition consisting of:
A a mixture of at least one polyamide A1, at least one polyphenylene ether A2 and optionally a compatibilizer A3 and optionally an olefinic and/or vinylaromatic polymer A4;
B 10 to 40% by weight of glass filler, the glass composition of which comprises at least 10.0% by weight of boron oxide and at most 15% by weight for the sum of magnesium oxide and calcium oxide;
C 20 to 50% by weight of salts of titanic acids, salts of stannic acids, salts of zirconic acids or mixtures thereof;
D 1 to 8% by weight of LDS additive;
E 0 to 5% by weight of additives other than components A, B, C and D;
wherein 80 to 100% by weight of mixture A consists of a mixture M of components A1, A2 and A3 and 0 to 20% by weight of component A4, in each case based on the sum of components M and A4, and wherein the sum of components M and A4 gives 100% by weight of mixture A;
and where the mixture M consists of 36 to 92% by weight of component A2, 8 to 60% by weight of component A1 and 0 to 4% by weight of component A3, in each case based on the sum of components A1 to A3, and where the sum of components A1 to A3 gives 100% by weight of the mixture M;
and wherein the sum of B and C is in the range from 35 to 70% by weight, based on the sum of components A to E;
and wherein the sum of components A to E gives 100% by weight of the molding composition.

2. A thermoplastic molding composition according to claim 1, wherein
component A1 is present in the mixture M in a proportion of from 10 to 48% by weight, particularly preferably from 10 to 45% by weight, based on the sum of components A1 to A3;
and component A2 is present in the mixture M in a proportion of from 48 to 89.9 percent by weight, particularly preferably from 52 to 89.8 percent by weight, based on the sum of A1 to A3;
and component A3 is present in the mixture M in a proportion of from 0.1 to 4 percent by weight, particularly preferably from 0.2 to 3 percent by weight, based on the sum A1 to A3;
and/or mixture A consists exclusively of components A1 to A3.

3. A thermoplastic molding composition according to one of the preceding claims, **characterized in that** the glass filler B is based on glass whose composition comprises 2 to 14% by weight, particularly preferably 4 to 12% by weight for the sum of the magnesium oxide and calcium oxide contents, based on the composition of the glass; and/or
12 to 24% by weight, particularly preferably 15 to 22% by weight, of boron oxide, based on the composition of the glass;
or
52.0 to 57.0% by weight of silicium dioxide, 13.0 to 17.0% by weight of aluminum oxide, 15.0 to 21.5% by weight of boron oxide, 2.0 to 6.0% by weight of magnesium oxide, 2.0 to 6.0% by weight of calcium oxide, 1.0 to 4.0% by weight of titanium dioxide, 0 to 1.5% by weight of fluorine, 0 to 0.6% by weight of alkali oxides.

4. A thermoplastic molding composition according to claim 3, **characterized in that** the glass filler B is selected
from the group consisting of fibers, ground fibers, particles, flakes, spheres, hollow spheres or combinations of the foregoing;
or
as glass fibers;
or
as glass fibers having a non-circular cross-section and an axial ratio of major to minor cross-sectional axis in the range of from 2 to 6, preferably from 3 to 5.

5. A thermoplastic molding composition according to any one of the preceding claims, **characterized in that** said at least one polyamide A1 is selected as
aliphatic polyamide from the group consisting of: PA 46, PA 6, PA 66, PA 6/66, PA 10, PA 11, PA 12, PA 516, PA 610, PA 612, PA 614, PA 616, PA 618, PA 1010, PA 1012, PA 1014, PA 1016, PA 1018, PA 1212 and mixtures thereof, wherein PA610, PA 612, PA 1010, PA12 and PA 616 are preferred;
and/or
semi-crystalline partially aromatic polyamides selected from the group consisting of: PA 4T/4I, PA 4T/6I, PA 5T/5I, PA 6T/6, PA 6T/6I, PA 6T/6I/6, PA 6T/66, 6T/610, 6T/612, PA 6T/10T, PA 6T/10I, PA 9T, PA 10T, PA 12T, PA 10T/10I, PA10T/106, PA10T/610, PA10T/612, PA10T/66, PA10T/6, PA10T/1010, PA10T/1012, PA10T/12, PA10T/11, PA 6T/9T, PA 6T/12T, PA 6T/10T/6I, PA 6T/6I/6, PA 6T/6I/12, and mixtures thereof, wherein PA 6T/6I, PA 6T/10T, PA 6T/10T/6I, and mixtures thereof are preferred;
and/or
amorphous or microcrystalline polyamide selected from the group consisting of: PA 6I/6T, PA MACM9, PA MACM10, PA MACM12, PA MACM13, PA MACM14, PA MACM16, PA MACM17, PA MACM18, PA PACM10, PA PACM12, PA PACM13, PA PACM14, PA PACM16, PA PACM17, PA PACM18, PA TMDC10, PA TMDC12, PA TMDC13, PA TMDC14, PA TMDC16, PA TMDC17, PA TMDC18, PA MACM10/10, PA MACMI/12, PA MACMT/12, PA 6I/MACMI/MACMT, PA MACMI/MACMT/12, PA MACMI/MACMT/MACM12, PA MACMI/MACMT/MACM12/12, PA 6I/6T/MACMI/MACMT/12, PA 6I/6T/MACMI, PA MACMI/MACM36, PA MACMT/MACM36, PA MACMI/MACM12, PA MACMT/MACM12, PA MACM6/11 PA MACM10/10, PA MACM12/PACM12, PA MACM14/PACM14, PA MACM18/PACM18, and mixtures thereof, wherein PA 6I/6T, PA MACM12, PA MACM14, PA TMDC12, PA TMDC14, PA MACMI/12, PA 6I/6T/MACMI/MACMT, PA MACMI/MACMT/12, PA MACMI/ MACMT/MACM12, PA 6I/6T/MACMI/MACMT/12, PA MACM10/10, PA MACM12/PACM12, PA MACM14/PACM14, PA MACM18/PACM18, and mixtures thereof. Most preferred are PA 6I/6T, PA MACM12, PA MACMI/12, PA MACMI/MACMT/12, PA MACMI/MACMT/MACM12, PA MACM12/PACM12 and blends thereof.

6. A thermoplastic molding composition according to any one of the preceding claims, **characterized in that** the polyphenylene ether of component A2 is selected from the group consisting of poly(2,6-dimethyl-1,4-phenylene) ether, poly(2, 6-diethyl-1,4-phenylene)ether, poly(2-methyl-6-ethyl-1,4-phenylene)ether, poly(2-methyl-6-propyl-1,4-phenylene)ether, poly(2,6-dipropyl-1,4-phenylene)ether, poly(2-ethyl-6-propyl-1,4-phenylene)ether or copolymers or mixtures thereof.

7. A thermoplastic molding composition according to any one of the preceding claims, **characterized in that** component A3 is selected as
a compatibilizer;
or
a mixture of a compatibilizer and a radical initiator;
and/or
a compatibilizer is selected from the group consisting of maleic acid, maleic anhydride, fumaric acid, acrylic acid, methacrylic acid, methylmaleic acid, methylmaleic anhydride, itaconic acid, itaconic anhydride, butenylsuccinic acid, butenylsuccinic anhydride, tetrahydrophthalic acid, tetrahydrophthalic anhydride N-phenylmaleimide, citric acid, malic acid and 2-hydroxynonadecane-1,2,3-tricarboxylic acid, the mono- or diesters of the abovementioned acids with C1- to C12-alcohols such as methanol or ethanol, the mono- or diamides of the abovementioned acids which, on the nitrogen, are optionally with alkyl or aryl radicals having up to 12 carbon atoms and the salts with alkali or alkaline earth metals such as calcium and potassium;
and/or
a radical initiator is selected from the group consisting of 1,1-di-tert-butyl-peroxy-3,3,5-trimethylcyclohexane, tert-butyl-peroxy-isopropyl-carbonate, tert-butyl-peroxy-3,3,5-trimethylhexoate, tert-butyl-peracetate, Tert-butyl perbenzoate, 4,4-di-tert-butyl peroxy-valeric acid n-butyl ester, 2,2-di-tert-butyl peroxy-butane, dicumyl peroxide, tert-butyl cumyl peroxide, 1,3-bis(tert-butyl peroxyisopropyl) benzene, di-tert-butyl peroxide.

8. A thermoplastic molding composition according to any one of the preceding claims, **characterized in that** the olefinic and/or vinylaromatic polymers A4 are selected from the group consisting of: styrene-ethylene-butylene-styrene block copolymers, styrene-ethylene-propylene-styrene block copolymers, styrene-butadiene-styrene block copolymers, styrene-styrene-butadiene-styrene block copolymers, polyethylene, polypropylene, polybutadiene, poly-4-methylpentene, ethylene-propylene copolymers, ethylene-butene copolymer, ethylene-methylhexadiene copolymers, propylene-methylhexadiene copolymers, ethylene-octene copolymer, ethylene-propylene-butene copolymers, ethylene-propylene-hexene copolymers, ethylene-propylene-methylhexadiene copolymers, poly(ethylene-vinyl acetate), ethylene-ethyl acrylate copolymer, ethylene-hexene copolymer, ethylene-propylene-diene terpolymers, and mixtures of these polymer materials;
and/or
are grafted with carboxylic acid or carboxylic acid anhydride groups;
and/or
are grafted with acrylic acid, methacrylic acid or maleic anhydride, the degree of grafting being 0.1 to 4.0, preferably 0.4 to 2.5 and particularly preferably 0.5 to 2.0 percent by weight, based on the grafted polymer A4.

9. A thermoplastic molding composition according to any one of the preceding claims, **characterized in that** component C is
a metal titanate, the metal being selected from the group consisting of barium, strontium, calcium, magnesium, lead, zirconium, manganese, neodymium, bismuth, hafnium, tin and zinc, and said metals being present in the titanates alone or in combination;
or
a metal titanate selected from the group consisting of barium titanate, strontium titanate, barium strontium titanate, and barium neodymium titanate.

10. A thermoplastic molding composition according to any one of the preceding claims, **characterized in that** component D contains or is entirely formed by at least one LDS additive based on copper and/or tin selected
from the following group: metal oxide, metal phosphate, preferably basic metal phosphate and/or metal hydroxide phosphate, preferably component (C) contains or is entirely formed by at least one LDS additive selected from the following group: Tin oxide; metal or metal oxide doped tin oxide; antimony doped tin oxide; metal oxide coated mica; antimony doped tin oxide coated mica; mixture of tin oxide and antimony oxide and optionally other metal oxides; spinels; copper chromium oxide; copper tungstate, copper oxide; copper hydroxide; copper hydroxide phosphate; copper phosphate; basic copper phosphates; copper-tin phosphate; basic copper-tin phosphate; tin phosphate; basic tin phosphate; antimony-doped tin oxide, preferably in combination with mica; or mixtures and combinations thereof;
or
from the group consisting of copper chromium oxide, copper tungstate, copper oxide, copper hydroxide phosphate, tin hydroxide phosphate, tin phosphate, copper phosphate, basic copper phosphates and tin phosphates, or mixtures thereof;
or
as copper tungstate.

11. A thermoplastic molding composition according to any one of the preceding claims, **characterized in that** the additives of component E are selected from the group consisting of: Stabilizers, anti-aging agents, antioxidants, antiozonants, processing stabilizers, processing aids, viscosity modifiers, light stabilizers, UV stabilizers, UV absorbers, inorganic heat stabilizers, in particular based on copper halides and alkali halides, organic heat stabilizers, optical brighteners, crystallization accelerators, crystallization retarders, flow auxiliaries, lubricants, lubricating agents, mold release agents, colorants, in particular dyes, inorganic pigments, organic pigments, marking agents and mixtures thereof.

12. A thermoplastic molding composition according to any one of the preceding claims, **characterized in that** the proportion of
component A is present in a range from 24 to 57.9% by weight, preferably from 31 to 51.8% by weight, based on the sum of components A to E;
and/or
component B is present in a range from 15 to 35% by weight, preferably from 18 to 32% by weight, based on the sum of components A to E;
and/or
component C is present in a range from 25 to 45% by weight, preferably in a range from 30 to 42% by weight, based on the sum of components A to E;
and/or
the sum of components B and C is present in a range from 40 to 65% by weight, preferably in a range from 45 to 60% by weight, based on the sum of components A to E;
and/or
component D is present in the range from 2 to 6% by weight, preferably in the range from 3 to 5% by weight, based on the sum of components A to E;
and/or
component E is present in the range from 0.1 to 5% by weight, preferably 0.2 to 4% by weight, based on the sum of components A to E.

13. A molded article comprising a molding composition according to any one of claims 1 to 12, or preferably consisting of said molding composition.

14. A molded article according to claim 13, **characterized in that** the molded body is components, housings or housing parts of devices communicating with electromagnetic waves having a frequency of 0.3 to 300 GHz.

15. A molded article according to claim 14, **characterized in that** the article is selected from the group consisting of components, housings or housing parts of transmitting and receiving devices, cell phones, tablets, laptops, navigation devices, surveillance cameras, photo cameras, sensors, diving computers, audio systems, remote controls, loudspeakers, headphones, radio devices, television devices, household appliances, kitchen appliances, door or gate openers, operating devices for the central locking system of vehicles, keyless go vehicle keys, temperature-measuring or temperature-indicating devices, measuring devices and control devices.

## Revendications

1. Composition de moulage thermoplastique constituée de :
A un mélange d'au moins un polyamide A1, d'au moins un polyphénylène éther A2 et éventuellement d'un agent de compatibilité A3 et éventuellement d'un polymère oléfinique et/ou vinylaromatique A4 ;
B 10 à 40 % en poids de charge de verre dont la composition de verre comprend au moins 10,0 % en poids d'oxyde de bore et au plus 15 % en poids pour la somme de l'oxyde de magnésium et de l'oxyde de calcium ;
C 20 à 50% en poids de sels d'acides titaniques, de sels d'acides stanniques, de sels d'acides zirconiques ou de leurs mélanges ;
D 1 à 8% en poids d'additif LDS ;
E 0 à 5% en poids d'additifs autres que les composants A, B, C et D ;
dans laquelle 80 à 100 % en poids du mélange A consiste en un mélange M des composants A1, A2 et A3 et 0 à 20 % en poids du composant A4, dans chaque cas sur la base de la somme des composants M et A4, et dans laquelle la somme des composants M et A4 donne 100 % en poids du mélange A ;
et où le mélange M consiste en 36 à 92% en poids du composant A2, 8 à 60% en poids du composant A1 et 0 à 4% en poids du composant A3, dans chaque cas sur la base de la somme des composants A1 à A3, et où la somme des composants A1 à A3 donne 100% en poids du mélange M ;
et dans lequel la somme de B et C est comprise entre 35 et 70 % en poids, par rapport à la somme des composants A à E ;
et dans laquelle la somme des composants A à E donne 100 % en poids de la composition de moulage.

2. Composition de moulage thermoplastique selon la revendication 1, dans laquelle
le composant A1 est présent dans le mélange M dans une proportion de 10 à 48 % en poids, de manière particulièrement préférée de 10 à 45 % en poids, par rapport à la somme des composants A1 à A3 ;
et le composant A2 est présent dans le mélange M dans une proportion de 48 à 89,9 % en poids, de manière particulièrement préférée de 52 à 89,8 % en poids, par rapport à la somme des composants A1 à A3 ;
et le composant A3 est présent dans le mélange M dans une proportion de 0,1 à 4 % en poids, de manière particulièrement préférée de 0,2 à 3 % en poids, par rapport à la somme de A1 à A3 ;
et/ou le mélange A se compose exclusivement des composants A1 à A3.

3. Composition de moulage thermoplastique selon l'une des revendications précédentes, **caractérisée en ce que** la charge de verre B est à base de verre dont la composition comprend
2 à 14% en poids, de manière particulièrement préférée 4 à 12% en poids pour la somme des teneurs en oxyde de magnésium et en oxyde de calcium, par rapport à la composition du verre ;
et/ou
12 à 24% en poids, de manière particulièrement préférée 15 à 22% en poids, d'oxyde de bore, par rapport à la composition du verre ;
ou
52,0 à 57,0% en poids de dioxyde de silicium, 13,0 à 17,0% en poids d'oxyde d'aluminium, 15,0 à 21,5% en poids d'oxyde de bore, 2,0 à 6,0% en poids d'oxyde de magnésium, 2,0 à 6,0% en poids d'oxyde de calcium, 1,0 à 4,0% en poids de dioxyde de titane, 0 à 1,5% en poids de fluor, 0 à 0,6% en poids d'oxydes alcalins.

4. Composition de moulage thermoplastique selon la revendication 3, **caractérisée en ce que** la charge de verre B est choisie
dans le groupe constitué par les fibres, les fibres broyées, les particules, les flocons, les sphères, les sphères creuses ou des combinaisons de ce qui précède;
ou
sous forme de fibres de verre ;
ou
sous forme de fibres de verre ayant une section transversale non circulaire et un rapport axial entre l'axe principal et l'axe secondaire de la section transversale dans la gamme de 2 à 6, de préférence de 3 à 5.

5. Composition de moulage thermoplastique selon l'une quelconque des revendications précédentes, **caractérisée en ce que** ledit au moins un polyamide A1 est choisi comme polyamide aliphatique dans le groupe constitué par : PA 46, PA 6, PA 66, PA 6/66, PA 10, PA 11, PA 12, PA 516, PA 610, PA 612, PA 614, PA 616, PA 618, PA 1010, PA 1012, PA 1014, PA 1016, PA 1018, PA 1212 et leurs mélanges, dans lesquels PA610, PA 612, PA 1010, PA12 et PA 616 sont préférés ;
et/ou
des polyamides partiellement aromatiques semi-cristallins choisis dans le groupe constitué par : PA 4T/4I, PA 4T/6I, PA 5T/5I, PA 6T/6, PA 6T/6I, PA 6T/6I/6, PA 6T/66, 6T/610, 6T/612, PA 6T/10T, PA 6T/10I, PA 9T, PA 10T, PA 12T, PA 10T/10I, PA10T/106, PA10T/610, PA10T/612, PA10T/66, PA10T/6, PA10T/1010, PA10T/1012, PA10T/12, PA10T/11, PA 6T/9T, PA 6T/12T, PA 6T/10T/6I, PA 6T/6I/6, PA 6T/6I/12, et leurs mélanges, dans lesquels PA 6T/6I, PA 6T/10T, PA 6T/10T/6I, et leurs mélanges sont préférés ;
et/ou
polyamide amorphe ou microcristallin choisi dans le groupe constitué par: PA 6I/6T, PA MACM9, PA MACM10, PA MACM12, PA MACM13, PA MACM14, PA MACM16, PA MACM17, PA MACM18, PA PACM10, PA PACM12, PA PACM13, PA PACM14, PA PACM16, PA PACM17, PA PACM18, PA TMDC10, PA TMDC12, PA TMDC13, PA TMDC14, PA TMDC16, PA TMDC17, PA TMDC18, PA MACM10/10, PA MACMI/12, PA MACMT/12, PA 6I/MACMI/MACMT, PA MACMI/MACMT/12, PA MACMI/MACMT/MACM12, PA MACMI/MACMT/MACM12/12, PA 6I/6T/MACMI/MACMT/12, PA 6I/6T/MACMI, PA MACMI/MACM36, PA MACMT/MACM36, PA MACMI/MACM12, PA MACMT/MACM12, PA MACM6/11 PA MACM10/10, PA MACM12/PACM12, PA MACM14/PACM14, PA MACM18/PACM18, et leurs mélanges, où PA 6I/6T, PA MACM12, PA MACM14, PA TMDC12, PA TMDC14, PA MACMI/12, PA 6I/6T/MACMI/MACMT, PA MACMI/MACMT/12, PA MACMI/ MACMT/MACM12, PA 6I/6T/MACMI/MACMT/12, PA MACM10/10, PA MACM12/PACM12, PA MACM14/PACM14, PA MACM18/PACM18, et leurs mélanges. Les plus préférés sont PA 6I/6T, PA MACM12, PA MACMI/12, PA MACMI/MACMT/12, PA MACMI/MACMT/MACM12, PA MACM12/PACM12 et leurs mélanges.

6. Composition de moulage thermoplastique selon l'une quelconque des revendications précédentes, **caractérisée en ce que** le polyphénylène éther du composant A2 est choisi dans le groupe constitué par le poly(2,6-diméthyl-1,4-phénylène)éther, le poly(2, 6-diéthyl-1,4-phénylène)éther, poly(2-méthyl-6-éthyl-1,4-phénylène)éther, poly(2-méthyl-6-propyl-1,4-phénylène)éther, poly(2,6-dipropyl-1,4-phénylène)éther, poly(2-éthyl-6-propyl-1,4-phénylène)éther ou leurs copolymères ou mélanges.

7. Composition de moulage thermoplastique selon l'une quelconque des revendications précédentes, **caractérisée en ce que** le composant A3 est choisi comme étant un agent compatibilisant ;
ou
un mélange d'un agent de compatibilité et d'un initiateur de radicaux ;
et/ou
un agent compatibilisant est choisi dans le groupe constitué par l'acide maléique, l'anhydride maléique, l'acide fumarique, l'acide acrylique, l'acide méthacrylique, l'acide méthylmaléique, l'anhydride méthylmaléique, l'acide itaconique, anhydride itaconique, acide buténylsuccinique, anhydride buténylsuccinique, acide tétrahydrophtalique, anhydride tétrahydrophtalique, N-phénylmaléimide, acide citrique, acide malique et 2-hydroxynonadécane-1, 2,3-tricarboxylique, les mono- ou diesters des acides précités avec des alcools en C1 à C12 tels que le méthanol ou l'éthanol, les mono- ou diamides des acides précités qui, sur l'azote, sont éventuellement avec des radicaux alkyle ou aryle ayant jusqu'à 12 atomes de carbone et les sels avec des métaux alcalins ou alcalino-terreux tels que le calcium et le potassium ;
et/ou
un initiateur radicalaire est choisi dans le groupe constitué par le 1,1-di-tert-butyl-peroxy-3,3,5-triméthylcyclohexane, le tert-butyl-peroxy-isopropyl-carbonate, le tert-butyl-peroxy-3,3,5-triméthylhexoate, le tert-butyl-peracétate, perbenzoate de tert-butyle, ester n-butylique de l'acide 4,4-di-tert-butyl peroxy-valérique, 2,2-di-tert-butyl peroxy-butane, peroxyde de dicumyle, peroxyde de tert-butyl cumyle, 1,3-bis(tert-butyl peroxyisopropyl) benzène, peroxyde de di-tert-butyle.

8. Composition de moulage thermoplastique selon l'une quelconque des revendications précédentes, **caractérisée en ce que** les polymères oléfiniques et/ou vinylaromatiques A4
sont choisis dans le groupe constitué par les copolymères séquencés styrène-éthylène-butylène-styrène, les copolymères séquencés styrène-éthylène-propylène-styrène, les copolymères séquencés styrène-butadiène-styrène, les copolymères séquencés styrène-butadiène-styrène, le polyéthylène, le polypropylène, le polybutadiène, le poly-4-méthylpentène, les copolymères éthylène-propylène, le copolymère éthylène-butène, les copolymères éthylène-méthylhexadiène, copolymères d'éthylène-méthylhexadiène, copolymères d'éthylène-octène, copolymères d'éthylène-propylène-butène, copolymères d'éthylène-propylène-hexène, copolymères d'éthylène-propylène-méthylhexadiène, poly(éthylène-acétate de vinyle), copolymère d'éthylène-acrylate d'éthyle, copolymère d'éthylène-hexène, terpolymères d'éthylène-propylène-diène et mélanges de ces matériaux polymers ;
et/ou
sont greffés avec des groupes acide carboxylique ou anhydride d'acide carboxylique ;
et/ou
sont greffés avec de l'acide acrylique, de l'acide méthacrylique ou de l'anhydride maléique, le degré de greffage étant de 0,1 à 4,0, de préférence de 0,4 à 2,5 et particulièrement de 0,5 à 2,0 pour cent en poids, par rapport au polymère A4 greffé.

9. Composition de moulage thermoplastique selon l'une quelconque des revendications précédentes, **caractérisée en ce que** le composant C est
un titanate métallique, le métal étant choisi dans le groupe constitué par le baryum, le strontium, le calcium, le magnésium, le plomb, le zirconium, le manganèse, le néodyme, le bismuth, l'hafnium, l'étain et le zinc, et lesdits métaux étant présents dans les titanates seuls ou en combinaison ;
ou
un titanate métallique choisi dans le groupe constitué par le titanate de baryum, le titanate de strontium, le titanate de baryum strontium et le titanate de baryum néodyme.

10. Composition de moulage thermoplastique selon l'une quelconque des revendications précédentes, **caractérisée en ce que** le composant D contient ou est entièrement formé par au moins un additif LDS à base de cuivre et/ou d'étain choisi dans le groupe suivant: oxyde métallique, phosphate métallique, de préférence phosphate métallique basique et/ou phosphate d'hydroxyde métallique, de préférence le composant (C) contient ou est entièrement formé par au moins un additif LDS choisi dans le groupe suivant: oxyde d'étain ; oxyde d'étain dopé par un métal ou un oxyde métallique ; oxyde d'étain dopé à l'antimoine ; mica revêtu d'oxyde métallique ; mica revêtu d'oxyde d'étain dopé à l'antimoine ; mélange d'oxyde d'étain et d'oxyde d'antimoine et éventuellement d'autres oxydes métalliques ; spinelles ; oxyde de cuivre et de chrome ; tungstate de cuivre, oxyde de cuivre ; hydroxyde de cuivre ; phosphate d'hydroxyde de cuivre ; phosphate de cuivre ; phosphates de cuivre basiques ; phosphate de cuivre-étain ; phosphate de cuivre-étain basique ; phosphate d'étain ; phosphate d'étain basique ; oxyde d'étain dopé à l'antimoine, de préférence en combinaison avec du mica ; ou leurs mélanges et combinaisons ;
ou
du groupe constitué par l'oxyde de cuivre-chrome, le tungstate de cuivre, l'oxyde de cuivre, le phosphate d'hydroxyde de cuivre, le phosphate d'hydroxyde d'étain, le phosphate d'étain, le phosphate de cuivre, les phosphates de cuivre basiques et les phosphates d'étain, ou leurs mélanges ;
ou
sous forme de tungstate de cuivre.

11. Composition de moulage thermoplastique selon l'une quelconque des revendications précédentes, **caractérisée en ce que** les additifs du composant E sont choisis dans le groupe constitué par : Stabilisateurs, agents anti-vieillissement, antioxydants, antiozonants, stabilisateurs de traitement, auxiliaires de traitement, modificateurs de viscosité, stabilisateurs à la lumière, stabilisateurs UV, absorbeurs UV, stabilisateurs thermiques inorganiques, en particulier à base d'halogénures de cuivre et d'halogénures alcalins, stabilisateurs thermiques organiques, azurants optiques, accélérateurs de cristallisation, retardateurs de cristallisation, auxiliaires d'écoulement, lubrifiants, agents lubrifiants, agents de démoulage, colorants, en particulier colorants, pigments inorganiques, pigments organiques, agents de marquage et leurs mélanges.

12. Composition de moulage thermoplastique selon l'une quelconque des revendications précédentes, **caractérisée en ce que** la proportion de
composant A est présente dans une gamme allant de 24 à 57,9% en poids, de préférence de 31 à 51,8% en poids, par rapport à la somme des composants A à E ;
et/ou
le composant B est présent dans une gamme de 15 à 35% en poids, de préférence de 18 à 32% en poids, par rapport à la somme des composants A à E ;
et/ou
le composant C est présent dans une gamme de 25 à 45 % en poids, de préférence dans une gamme de 30 à 42 % en poids, sur la base de la somme des composants A à E ;
et/ou
la somme des composants B et C est présent dans une gamme de 40 à 65% en poids, de préférence dans une gamme de 45 à 60% en poids, sur la base de la somme des composants A à E ;
et/ou
le composant D est présent dans la gamme de 2 à 6 % en poids, de préférence dans la gamme de 3 à 5 % en poids, sur la base de la somme des composants A à E ;
et/ou
le composant E est présent dans la gamme de 0,1 à 5 % en poids, de préférence de 0,2 à 4 % en poids, par rapport à la somme des composants A à E.

13. Article moulé comprenant une composition de moulage selon l'une quelconque des revendications 1 à 12, ou de préférence constitué de ladite composition de moulage.

14. Article moulé selon la revendication 13, **caractérisé en ce que** le corps moulé est constitué de composants, de boîtiers ou de parties de boîtier de dispositifs communiquant avec des ondes électromagnétiques ayant une fréquence de 0,3 à 300 GHz.

15. Article moulé selon la revendication 14, **caractérisé en ce que** l'article est choisi dans le groupe constitué de composants, de boîtiers ou de parties de boîtier d'appareils d'émission et de réception, de téléphones cellulaires, de tablettes, d'ordinateurs portables, d'appareils de navigation, de caméras de surveillance, d'appareils photo, de capteurs, d'ordinateurs de plongée, de systèmes audio, de télécommandes, de haut-parleurs, d'écouteurs, d'appareils de radio, d'appareils de télévision, d'appareils ménagers, d'appareils de cuisine, d'ouvre-porte ou d'ouvre-barrière, de dispositifs de commande pour le système de verrouillage central de véhicules, de clés de véhicules sans clé, d'appareils de mesure ou d'indication de température, d'appareils de mesure et d'appareils de commande.
